# EUROPÄISCHE PATENTSCHRIFT

(11) **EP 3 941 766 B1**
(45) Veröffentlichungstag und Bekanntmachung des Hinweises auf die Patenterteilung: **28.12.2022**
(21) Anmeldenummer: 20700653.7
(22) Anmeldetag: 08.01.2020
(51) Int. Cl.: B60H 1/00, B60H 1/34

(54) **BELÜFTUNGSANORDNUNG ZUR BELÜFTUNG EINES KRAFTFAHRZEUGINNENRAUMS**
VENTILATION ARRANGEMENT FOR VENTILATING A MOTOR VEHICLE INTERIOR
AGENCEMENT D'AÉRATION POUR AÉRER UN HABITACLE DE VÉHICULE AUTOMOBILE

(30) Priorität: 20.03.2019 DE 102019203839
(43) Veröffentlichungstag der Anmeldung: 26.01.2022
(73) Patentinhaber: PSA Automobiles SA, 78300 Poissy (FR)
(72) Erfinder: FLECKENSTEIN, Uwe, 65428 Rüsselsheim am Main (DE); SEYBOLD, Lothar, 65428 Rüsselsheim am Main (DE); SKIBINSKI, Valter, 65428 Rüsselsheim am Main (DE); WEXEL, Dirk, 65428 Rüsselsheim am Main (DE)
(74) Vertreter: Spitzfaden, Ralf
(86) Internationale Anmeldenummer: PCT/EP2020/050290
(87) Internationale Veröffentlichungsnummer: WO 2020/187458

(56) Entgegenhaltungen:
- WO-A1-2019/048264
- DE-A1-102015 109 068
- JP-A- 2014 213 801

## Beschreibung

### Technisches Gebiet

Die vorliegende Erfindung betrifft ein Verfahren zur Belüftung eines Kraftfahrzeuginnenraums mit einer Belüftungsanordnung, eine Belüftungsanordnung zur Belüftung eines Kraftfahrzeuginnenraums und ein Computerprogramm.

### Hintergrund

Das Innenraumdesign von Kraftfahrzeugen, insbesondere von Personenkraftwagen unterliegt stetigen Veränderungen. Insbesondere großflächige Displays und Anzeigen finden vermehrt im Bereich des Armaturenbretts Verwendung. Die hieraus bedingten Designanforderungen machen die Entwicklung von neuartigen Luftausströmer für die Innenraumbelüftung erforderlich. Diese sollen zumindest hinsichtlich ihrer Geometrie möglichst universell an unterschiedliche Einbaubedingungen anpassbar sein. Mit einem Luftausströmer sollen ferner die Richtung und die Ausströmcharakteristik der dem Innenraum zugeführten Luft bedarfsgerecht verändert werden können.

So ist beispielsweise aus der WO 2005/068233 A1 ein Verfahren zur Steuerung einer Heizung-, Belüftungs- oder Klimaanlage bekannt, wobei ein zugeführter Luftstrom in zumindest einen ersten und einen zweiten Teilluftstrom aufgeteilt wird. Der erste Teilluftstrom wird dabei ohne Drall zu einer Austrittsöffnung eines Luftausströmers und der zweite Luftstrom als ein mit einem Drall beaufschlagter Mantelluftstrom zu einer Austrittsöffnung des Luftausströmers geführt. Die Ausströmcharakteristik ist durch einen einstellbaren Drall veränderbar. Hierdurch kann dem Luftstrom eine Streu-oder Spotcharakteristik verliehen werden.

Ferner ist aus der US 2015/0126104 A1 ein Luftausströmer mit insgesamt vier Lufteinlässen bekannt, die jeweils mit einem Ventil versehen sind. Des Weiteren offenbart die DE 10 2015 220 739 A1 eine Anordnung zum Einleiten von Luft in einen Fahrgastraum eines Fahrzeugs, aufweisend wenigstens drei beabstandet voneinander angeordnete, mit Luft versorgbare Luftkanäle.

Weiterhin bekannt sind die gattungsbildende JP 2014 213801 A sowie die DE 10 2015 109068 A1 und die WO 2019/048264 A1.

Gängige Luftausströmer sind mit mehreren verstellbaren Lamellen und/oder Klappen ausgestaltet, um die ausströmenden Luftmenge, die Luftrichtung als auch die Ausströmcharakteristik, beispielsweise zwischen einem breit aufgefächerten oder einem punktförmig konzentrierten Luftstrom zu verändern.

Das Vorsehen von verstellbaren Lamellen und/oder Klappen erhöht die Komplexität solcher Luftausströmer. Klappen und/oder Lamellen tragen ferner zur Erhöhung des Gewichts und der Herstellungs- bzw. Montagekosten von Luftausströmern bei. Ferner bedingen verstellbare Klappen und/oder Lamellen eine Einschränkung hinsichtlich der geometrischen Ausgestaltung von Luftausströmern.

Der vorliegenden Erfindung liegt demgegenüber die Aufgabe zugrunde, ein Verfahren zur Belüftung eines Kraftfahrzeuginnenraums mit einer Belüftungsanordnung und eine Belüftungsanordnung zur Belüftung eines Kraftfahrzeuginnenraums bereitzustellen, die besonders einfach und intuitiv bedienbar sind, die mit einer vergleichsweise geringen Anzahl an bewegliche Komponenten implementierbar sind und welche zur Verringerung des Kraftfahrzeuggewicht beitragen.

### Vorteilhafte Ausgestaltungen

Diese Aufgabe wird mit einem Verfahren zur Belüftung eines Kraftfahrzeuginnenraums mit einer Belüftungsanordnung sowie mit einer Belüftungsanordnung zur Belüftung eines Kraftfahrzeuginnenraums gemäß den Merkmalen der unabhängigen Patentansprüche gelöst Vorteilhafte Ausgestaltungen sind dabei jeweils Gegenstand abhängiger Patentansprüche.

Insoweit ist ein Verfahren zur Belüftung eines Kraftfahrzeuginnenraums mittels einer Belüftungsanordnung vorgesehen. Die Belüftungsanordnung weist zumindest einen im Innenraum des Kraftfahrzeugs angeordneten ersten Luftausströmer auf. Der erste Luftausströmer weist einen ersten Strömungskanal und einen zweiten Strömungskanal auf. Der erste und der zweite Strömungskanal sind strömungstechnisch voneinander getrennt. Sie münden unter unterschiedlichen Winkeln in eine Ausströmöffnung des ersten Luftausströmers. Das Verfahren zur Belüftung des Kraftfahrzeuginnenraums umfasst dabei die Schritte des Beaufschlagens des ersten Strömungskanals mit einem ersten Luftstrom und/oder das Beaufschlagen des zweiten Strömungskanals mit einem zweiten Luftstrom unter Bildung eines ersten Ausströmer-Luftstroms an der Ausströmöffnung. Nach einer weiteren Ausgestaltung des Verfahrens weist die Belüftungsanordnung zumindest einen zweiten Luftausströmer auf, welcher beabstandet zum ersten Luftausströmer angeordnet ist und welcher einen ersten Strömungskanal und einen zweiten Strömungskanal aufweist. Der erste und der zweite Strömungskanal sind strömungstechnisch voneinander getrennt und münden unter unterschiedlichen Winkeln in eine Austrittsöffnung des zweiten Luftausströmers. Der erste und der zweite Luftausströmer können quasi identisch oder baugleich ausgestaltet, hinsichtlich ihrer Aufteilung in einen ersten und in einen zweiten Strömungskanal jedoch zumindest baulich ähnlich ausgebildet sein.

Die ersten Strömungskanäle von erstem und zweitem Luftausströmer sind mittels eines ersten Verteilerkanals eines Luftverteilers strömungstechnisch miteinander gekoppelt. Selbiges gilt auch für die zweiten Strömungskanäle. So sind die zweiten Strömungskanäle von erstem und zweitem Luftausströmer mittels eines zweiten Verteilerkanals des Luftverteilers strömungstechnisch miteinander gekoppelt.

Der Ausströmer-Luftstrom wird Ausgangs der Ausströmöffnung vom ersten Luftstrom und vom zweiten Luftstrom gespeist. Der erste Ausströmer-Luftstrom weist in einem ersten Betriebsmodus des Verfahrens bzw. in einen ersten Betriebsmodus der Belüftungsanordnung eine erste Strömungsrichtung auf.

In einem weiteren Schritt wird, insbesondere beim Übergang in einen zweiten Betriebsmodus des Verfahrens oder der Belüftungsanordnung wird der Luftmassenstrom des ersten Luftstroms relativ zum Luftmassenstrom des zweiten Luftstroms verändert. Es entsteht hierbei ein zweiter Ausströmer-Luftstrom an der Austrittsöffnung. Der zweite Ausströmer-Luftstrom weist eine zweite Strömungsrichtung auf. Die zweite Strömungsrichtung unterscheidet sich von der ersten Strömungsrichtung.

Mit anderen Worten kann durch Variation bzw. durch Veränderung des Luftmassenstroms des ersten Luftstroms im ersten Strömungskanal relativ zum Luftmassenstrom des zweiten Luftstroms im zweiten Strömungskanal die Hauptströmungsrichtung des von erstem und zweitem Luftstrom gespeisten Ausströmer-Luftstroms variiert werden. Für die Veränderung oder Variation der Richtung des Ausströmer-Luftstroms ist keine Verstellung einer etwa im Bereich der Austrittsöffnung vorgesehenen Lamelle oder eines entsprechenden Luftleitelement erforderlich. Mithin kann der Luftausströmer lamellen-und/oder klappenfrei ausgestaltet sein. Der erste und der zweite Luftstrom können aus einem beispielsweise von einem Gebläse zugeführten Luftstrom abgezweigt sein. Während der erste und der zweite Luftstrom durch die jeweiligen ersten und zweiten Strömungskanäle strömen sind sie jedoch strömungstechnisch voneinander getrennt. Sie werden an der oder im Bereich der Ausströmöffnung vereint.

Zur gleichzeitigen Änderung der Strömungsrichtungen der Ausströmer-Luftströme des ersten Luftausströmers und des zweiten Luftausströmers wird ferner der Luftmassenstrom im ersten Verteilerkanals relativ zum Luftmassenstrom im zweiten Verteilerkanals verändert.

Als Folge hiervon erfährt der Ausströmer-Luftstrom am ersten Luftausströmers eine Richtungsänderung. Selbiges trifft für den Ausströmer-Luftstrom Arm zweiten Luftausströmer zu. An den Luftausströmer selbst sind hierfür keinerlei Klappen oder Lamellen zu bewegen. Die Veränderung oder die Richtung der Ausströmer-Luftströme am ersten und zweiten Strömungskanal kann zentral, nämlich durch Umverteilung der Luftmassenströme auf den ersten und den zweiten Verteilerkanal des Luftverteilers erfolgen. Hiermit lassen sich die Ausströmcharakteristika mehrerer, beispielsweise im Innenraum des Kraftfahrzeugs verteilt angeordneter Luftausströmer synchron und zeitgleich verändern. Insbesondere lassen sich die Ausrichtungen von den Luftausströmer ausgehenden Ausströmer-Luftströme zeitlich und synchron zeitlich verändern.

Nach einer weiteren Ausgestaltung wird die Strömungsrichtung des Ausströmer-Luftstroms durch Verändern des Luftmassenstroms des ersten Luftstroms relativ zum Luftmassenstrom des zweiten Luftstroms verändert. Hierzu kann eine Luftzufuhr im einem von erstem und zweitem Strömungskanal gegenüber dem jeweils anderen von erstem und zweitem Strömungskanal gedrosselt oder gesteigert werden. Der erste Luftstrom und der zweite Luftstrom können im Bereich der Austrittsöffnung insbesondere konvergieren oder aufeinander zu ausgerichtet sein.

Der Ausströmer-Luftstrom kann je nach Luftmassenstrom im ersten oder im zweiten Strömungskanal entweder vom ersten Luftstrom oder vom zweiten Luftstrom dominiert sein. Er kann eine durch die Ausrichtung des auslassseitigen Endes von erstem oder zweitem Strömungskanal vorgesehene Richtung aufweisen. Indem die Luftmassenverhältnisse im ersten und im zweiten Strömungskanal variabel verändert werden können ändert sich auch der durch die Vereinigung von erstem und zweitem Luftstrom gebildete Ausströmer-Luftstrom hinsichtlich seiner Richtung. Ist der Luftmassenstrom im ersten Strömungskanal vergleichsweise groß gegenüber dem Luftmassenstrom im zweiten Strömungskanal, so ist die Richtung des Ausströmer-Luftstroms überwiegend durch die Ausrichtung des auslassseitigen Endes des ersten Strömungskanals vorgegeben. Dies gilt entsprechend für den Fall, dass der Luftmassenstrom des zweiten Strömungskanals deutlich größer ist als der Luftmassenstrom im ersten Strömungskanal.

Der Luftausströmer kann beispielsweise als Defroster-Düse fungierien und in einem ersten Betriebsmodus die ihm zugeführte Luft beispielsweise an die Innenseite einer in unmittelbarer Nähe liegenden Scheibe richten. In einem weiteren Betriebsmodus und durch bloße Änderung der Strömungsrichtung des Ausströmer-Luftstroms kann der Luftausströmer auch als Düse oder als Luftausströmer zur Innenraumbelüftung fungieren und den Luftstrom quasi von der angrenzenden Scheibe weg direkt in den Innenraum des Kraftfahrzeugs richten.

Nach einer weiteren Ausgestaltung wird der Luftmassenstrom im ersten Strömungskanal relativ zum Luftmassenstrom im zweiten Strömungskanal regelmäßig und/oder kontinuierlich verändert. Hierdurch kann ein sogenannter Fan-Modus erzielt werden, demzufolge die Strömungsrichtung des aus dem Luftausströmer ausströmenden Ausströmer-Luftstroms einer regelmäßigen, stetigen oder kontinuierlichen Veränderung unterliegt. Die Veränderung der Strömungsverhältnisse, insbesondere der Luftmassenströme im ersten und im zweiten Strömungskanal kann programmgesteuert oder nach zeitlichen Vorgaben erfolgen. Auch kann das Verfahren einen Fan-Modus bereitstellen, in welchem z.B. der Luftmassenstrom im ersten Strömungskanal ausgehend von einem Minimum zulasten des Luftmassenstroms im zweiten Strömungskanal erhöht wird und mit Erreichen eines maximalen Luftmassenstroms zu Gunsten des Luftmassenstroms im zweiten Strömungskanal wieder reduziert wird. Auf diese Art und Weise kann ein sich in seiner Richtung zeitlich verändern der Luftstrom, etwa ein hin und her schwenkender Ausströmer-Luftstrom an der Austrittsöffnung des Luftausströmers erzeugt werden. Die Summe der durch den ersten und den zweiten Strömungskanal strömenden Luftströme bzw. Luftmasse kann hierbei gleich bleiben.

Nach einer weiteren Ausgestaltung weist die Belüftungsanordnung ein Gebläse und eine Ventil-oder Klappenanordnung auf. Mittels des Gebläses wird ein Luftstrom erzeugt, der mittels der Ventil-oder Klappenanordnung variabel und verstellbar in erste und zweite Luftströme aufgeteilt wird. Die ersten und die zweiten Luftströme werden dem jeweiligen ersten und zweiten Verteilerkanal zugeführt. Der erste Luftstrom wird dem ersten Verteilerkanals zugeführt. Der zweite Luftstrom wird dem zweiten Verteilerkanals zugeführt. Mittels des Gebläses kann der insgesamt zur Verfügung stehende Luftstrom reguliert werden. Mittels der Ventil-und Klappenanordnung kann der Haupt-Luftstrom auf mehrere Teil-Luftströme, nämlich in erste und zweite Luftströme aufgeteilt werden, die dem ersten und dem zweiten Verteilerkanals zuführbar sind bzw. zugeführt werden.

Das Verfahren ist keineswegs auf die Implementierung von lediglich zwei Luftausströmer beschränkt. Es können 2, 3, 4, 6, 8 oder weit mehr als 10 Luftausströmer mit jeweils einem ersten und einem zweiten Verteilerkanal in der hier beschriebenen Art und Weise strömungstechnisch miteinander gekoppelt werden. Die Ausströmcharakteristik, insbesondere die Ausströmrichtung der einzelnen Luftausströmer kann mittels einer einzigen Ventil-oder Klappenanordnung bedarfsgerecht verändert werden.

Nach einer weiteren Ausgestaltung sind der erste Luftausströmer und der zweite Luftausströmer voneinander beabstandet angeordnet. Der erste Strömungskanal des ersten Luftausströmers ist an einer dem zweiten Luftausströmer zugewandten Seite des ersten Luftausströmers angeordnet und der erste Strömungskanal des zweiten Luftausströmers ist an einer dem ersten Luftausströmer zugewandten Seite des zweiten Luftausströmers angeordnet. Zur Erzeugung einer kombinierten Spot-Ausströmcharakteristik von erstem und zweitem Luftausströmer wird im zweiten Verteilerkanals ein höherer Luftmassenstrom als im ersten Verteilerkanal eingestellt.

Typischerweise ist hierbei der zweite Strömungskanal bezogen auf die Hauptströmungsrichtung des Ausströmers in Richtung zum ersten Strömungskanal hin geneigt ausgerichtet; und umgekehrt. Indem in dem zweiten Verteilerkanal ein höherer Luftmassenstrom als im ersten Verteilerkanal vorherrscht liegt, sind auch die zweiten Strömungskanäle von erstem und zweitem Luftausströmer mit einem höherer Luftmassenstrom beaufschlagt als die jeweiligen ersten Strömungskanäle. Dies führt dazu, dass die aus den einzelnen Strömungskanälen ausströmenden Ausströmer-Luftströme aufeinander zu gerichtet sind.

Durch eine bedarfsgerechte Auswahl und wechselseitige Anordnung einzelner erster und zweiter, gegebenenfalls auch dritter und vierter Luftausströmer kann ein vorgegebener Bereich im Innenraum des Kraftfahrzeugs etwa zur Verwirklichung einer Spot-Anströmcharakteristik mit einem räumlich konzentrierten Luftstrom beaufschlagt werden.

Nach einer Variante hiervon kann zur Erzeugung einer diffusen oder räumlich divergierenden kombinierten Ausströmcharakteristik von erstem und zweitem Luftausströmer im ersten Verteilerkanal ein höherer Luftmassenstrom als im zweiten Verteilerkanal eingestellt werden. Da der erste Strömungskanal der jeweiligen Luftausströmer mit dem ersten Verteilerkanals in Strömungsverbindung steht führt dies dazu, dass die einzelnen Ausströmer-Luftströme der Luftausströmer voneinander weg weisen. Die kombinierte Ausströmcharakteristik der zumindest ersten und zweiten Luftausströmer, welche sich durch die Kombination, Superposition oder Luftmassenüberlagerung der einzelnen Ausströmer-Luftströme von erstem und zweitem Luftausströmer bildet ist insoweit vergleichsweise diffus oder breit aufgefächert.

Ein weiterer Aspekt betrifft ein Computerprogramm zur Durchführung des oben beschriebenen Verfahrens. Das Computerprogramm besitzt computerlesbare Instruktionen bzw. Befehle, die von einem Computer und insbesondere dessen Mikroprozessor abgearbeitet werden können. Bei dem Computer kann es sich um das Motorsteuergerät handeln. Im Fall der Abarbeitung durch den Computer ergibt sich ein Verfahren nach mindestens einem der oben beschriebenen Ausführungsformen.

Nach einem weiteren Aspekt betrifft die vorliegende Erfindung eine Belüftungsanordnung zur Belüftung eines Kraftfahrzeuginnenraums, mittels welcher insbesondere das zuvor beschriebene Verfahren durchführbar ist. Die Belüftungsanordnung weist zumindest einen ersten im Innenraum des Kraftfahrzeugs anordenbaren Luftausströmer auf. Dieser weist einen ersten Strömungskanal und einen zweiten Strömungskanal auf. Der erste und der zweite Strömungskanal sind strömungstechnisch voneinander getrennt. Sie münden unter unterschiedlichen Winkeln in eine Austrittsöffnung, mithin in eine gemeinsame Ausströmöffnung des ersten Luftausströmers.

Die Belüftungsanordnung weist ferner zumindest einen zweiten im Innenraum des Kraftfahrzeugs anordenbaren Luftausströmer auf. Dieser zweite Luftausströmer weist ebenfalls einen ersten Strömungskanal und einen zweiten Strömungskanal auf. Der erste und der zweite Strömungskanal sind strömungstechnisch voneinander getrennt. Sie münden unter unterschiedlichen Winkeln in eine Austrittsöffnung des zweiten Luftausströmers. Die Belüftungsanordnung weist ferner einen Luftverteiler auf, welcher einen ersten Verteilerkanal und einen zweiten Verteilerkanal aufweist. Der erste Verteilerkanals ist vom zweiten Verteilerkanals strömungstechnisch getrennt. Die ersten Strömungskanäle von erstem und zweitem Luftausströmer sind mittels des ersten Verteilerkanals strömungstechnisch miteinander gekoppelt. Gleiches trifft auch für die zweiten Strömungskanäle zu. Mithin sind die zweiten Strömungskanäle von erstem und zweitem Luftausströmer mittels des zweiten Verteilerkanals strömungstechnisch miteinander gekoppelt, bzw. unmittelbar strömungstechnisch miteinander verbunden.

Zur gleichzeitigen Änderung einer Richtung der Ausströmer-Luftströme des ersten Luftausströmers und des zweiten Luftausströmers ist der Luftmassenstrom im ersten Verteilerkanals relativ zum Luftmassenstrom im zweiten Verteilerkanals variabel. Mithin kann der Luftmassenstrom im ersten Verteilerkanal und damit auch in den hiermit in Strömungsverbindung stehenden ersten Strömungskanälen von erstem und zweitem Luftausströmer relativ zum Luftmassenstrom des zweiten Verteilerkanals und damit auch relativ zu den zweiten Strömungskanälen von erstem und zweitem Luftausströmer verändert werden. Die Veränderung der Luftmassenströme kann zentral, beispielsweise mittels einer zentral im oder am Luftverteiler vorgesehenen Ventil-oder Klappenanordnung erfolgen. Mittels einer einzigen Ventil-oder Klappenanordnung können die Luftmassenströme im ersten Verteilerkanal und im zweiten Verteilerkanal bedarfsgerecht und unabhängig voneinander verändert bzw. reguliert werden.

Es ist insbesondere vorgesehen, dass die Ausströmrichtung des jeweiligen ersten bzw. zweiten Ausströmer-Luftstroms durch Veränderung des Luftmassenstromverhältnisses im ersten Verteilerkanal relativ zum zweiten Verteilerkanal variierbar ist bzw. gezielt verändert wird. Auf diese Art und Weise können einzig und durch eine Regulierung des Luftmassenstroms beispielsweise im ersten Verteilerkanal relativ zum Luftmassenstrom im zweiten Verteilerkanal die Richtungen der aus sämtlichen, mit den jeweiligen Verteilerkanälen strömungstechnisch in Verbindung stehenden, Luftausströmern ausströmenden Luft bedarfsgerecht verändert bzw. eingestellt werden.

Die Belüftungsanordnung kann Teil einer Heizung-Ventilations- oder Klimaanlageneinrichtung ausgestaltet sein. Sie kann aber auch als HVAC-Modul (Heating Ventilating and Air Condition - Modul) implementiert sein.

Nach einer weiteren Ausgestaltung weist die Belüftungsanordnung ein Gebläse zur Erzeugung eines Luftstroms auf. Die Belüftungsanordnung weist ferner eine Ventil-oder Klappenanordnung auf, mittels welcher der typischerweise vom Gebläse erzeugte Luftstrom variabel und verstellbar in erste und zweite Luftströme für den ersten Verteilerkanal und für den zweiten Verteilerkanal aufteilbar ist. Mittels der Ventil-oder Klappenanordnung kann der bereitgestellte Luftstrom variabel auf den ersten und den zweiten Verteilerkanal aufgeteilt werden.

Es ist hierbei insbesondere vorgesehen, dass der Luftmassenstrom im ersten Verteilerkanal unabhängig vom Luftmassenstrom des zweiten Verteilerkanals regulierbar oder einstellbar ist. Es kann aber auch vorgesehen sein, dass eine Erhöhung des Luftmassenstroms im ersten Verteilerkanal zulasten des Luftmassenstroms im zweiten Verteilerkanals geht; und umgekehrt. Ferner kann auch zumindest ein Teil des zur Verfügung stehenden und mittels der Ventil- oder Klappenanordnung auf die ersten und zweiten Verteilerkanals aufteilbaren Luftstroms auch zumindest zum Teil durch von außen zugeführte Frischluft gespeist werden, die insbesondere bei zügiger Fahrt des Kraftfahrzeugs vom Fahrtwind abzweigbar ist.

Nach einer weiteren Ausgestaltung weist die Belüftungsanordnung ferner eine Steuerung auf, mittels welcher der Luftmassenstrom im ersten Verteilerkanal relativ zum Luftmassenstrom im zweiten Verteilerkanal regelmäßig und/oder kontinuierlich variierbar ist. Ferner kann die Steuerung programmgesteuert sein bzw. programmsteuerbar sein. Insbesondere kann die Steuerung verschiedene Betriebsmodi bereitstellen, die vom Endanwender auswählbar sind. Die Steuerung kann beispielsweise zur Implementierung eines Fan-Gebläsemodus ausgestaltet sein und beispielsweise das Verhältnis der Luftmassenströme im ersten und zweiten Verteilerkanals kontinuierlich oder schrittweise, beispielsweise einer vorgegebenen Programmabfolge folgend verändern.

Auf diese Art und Weise kann an der Austrittsöffnung der betreffenden Luftausströmers eine sich stetig, schrittweise bzw. kontinuierlich oder einer vorgegebenen Programmfolge ändernde Richtung des Ausströmer-Luftstroms bereitgestellt werden. Dies kann für eine verbesserte Umwälzung der im Kraftfahrzeuginnenraum befindlichen Luft sorgen.

Nach einer weiteren Ausgestaltung weist die Austrittsöffnung des ersten Luftausströmers und des zweiten Luftausströmers eine Querschnittsgeometrie mit einer Höhe H und mit einer Breite B. Ein Breiten- zu Höhenverhältnis B/H oder ein Höhen- zu Breitenverhältnis H/B ist dabei größer als 1, größer als 2, größer als 3, größer als 5 oder größer als 10. Insbesondere kann der Luftauslass schlitzartig ausgestaltet sein, wobei das Breiten zu Höhenverhältnis B/H größer als 5 oder größer als 10 ist. Die hier angegebenen Geometrie des Luftauslasses eignen sich insbesondere zur beliebigen und universellen Anpassung der Geometrie des Luftausströmers an vorgegebene Einbaubedingungen im Kraftfahrzeuginnenraum.

Nach einer weiteren Ausgestaltung weist die Ausströmöffnung des ersten Luftausströmers eine erste Längserstreckung auf. Die Austrittsöffnung des zweiten Luftausströmers weist eine zweite Längserstreckung auf. Beide Luftausströmer können beispielsweise eine im Querschnitt ovale oder rechteckige Querschnittsgeometrie aufweisen. Die erste und die zweite Längserstreckung können einen Winkel zwischen 20° und 160°, bevorzugt einen Winkel zwischen 45° und 135°, weiter bevorzugt einen Winkel zwischen 60° und 120° sowie weiter bevorzugt einen Winkel zwischen 75° und 105° zueinander einschließen.

Auch können die Längserstreckungen von erstem und zweitem Luftausströmer in etwa um 90° zueinander gedreht sein. Beispielsweise kann ein erster Luftausströmer mit seiner Längserstreckung beispielsweise annähernd oder im Wesentlichen vertikal im Kraftfahrzeuginnenraum angeordnet sein. Ein beabstandet hierzu oder auch hieran angrenzende Luftausströmer kann beispielsweise um 90° gedreht, d. h. nahezu oder im Wesentlichen horizontal ausgerichtet sein. Der erste und der zweite Luftausströmer können beispielsweise nach Art einer L-förmigen Anordnung zueinander ausgerichtet sein. Ein oberes oder unteres Ende eines zum Beispiel vertikal ausgerichteten Luftausströmers kann in etwa mit der vertikalen Position eines horizontal ausgerichteten Luftausströmers zusammenfallen oder bezogen auf die Vertikale unmittelbar an dessen Vertikalposition angrenzen. Ein horizontales Ende eines horizontal ausgerichteten Luftausströmers kann beispielsweise an ein oberes oder unteres Ende eines vertikal ausgerichteten Luftausströmers angrenzen.

Der individuell Geometrie und der wechselseitigen Anordnung mehrerer Luftausströmer im Kraftfahrzeuginnenraum sind grundsätzlich keine Grenzen gesetzt. Es können insbesondere auch drei oder mehr Luftausströmer im Innenraum des Kraftfahrzeugs angeordnet sein, welche beispielsweise U-förmige Geometrien bilden, wobei ein erster und ein dritter Luftausströmer quasi parallel und in Vertikalrichtung zueinander angeordnet sind und wobei ein zweiter Luftausströmer horizontal ausgerichtet und zwischen den ersten und dritten Luftausströmern angeordnet ist. Selbstredend können auch mehrere Luftausströmer in geradliniger Verlängerung aneinander angrenzend oder in einem vorgegebenen Abstand zueinander im Innenraum des Kraftfahrzeugs angeordnet sein.

Nach einer weiteren Ausgestaltung der Belüftungsanordnung sind der erste Luftausströmer und der zweite Luftausströmer voneinander beabstandet im Innenraum des Kraftfahrzeugs anordenbar. Sie können auch entsprechend beabstandet im Innenraum des Kraftfahrzeugs angeordnet sein. Der erste Strömungskanal des ersten Luftausströmers ist dabei an einer dem zweiten Luftausströmer zugewandten Seite des ersten Luftausströmers angeordnet. Der erste Strömungskanal des zweiten Luftausströmers ist ferner an einer dem ersten Luftausströmer zugewandten Seite des Luftausströmers angeordnet.

Mit anderen Worten sind die ersten Strömungskanäle von erstem und zweitem Luftausströmer an aneinander zugewandten Seiten oder Abschnitten der Luftausströmer angeordnet. Dementsprechend befinden sich die zweiten Strömungskanäle von erstem und zweitem Luftausströmer an voneinander abgewandten Seiten oder Bereichen von erstem und zweitem Luftausströmer.

Zur Erzeugung einer kombinierten Spot-Ausströmcharakteristik von erstem und zweitem Luftausströmer ist in dem zweiten Verteilerkanal ein höherer Luftmassenstrom als im ersten Verteilerkanals einstellbar. Mit anderen Worten kann für die Erzielung einer Spot-Ausströmcharakteristik, die sich infolge einer Überlappung einzelner Ausströmer-Luftströme ergibt jeweils im zweiten Verteilerkanal ein höherer Luftmassenstrom als im ersten Verteilerkanal eingestellt werden. Da der zweite Verteilerkanal angrenzend an die Ausströmöffnung zum ersten Verteilerkanal hin ausgerichtet ist und da der durch den zweiten Verteilerkanal bzw. durch den zweiten Strömungskanal strömende Luftmassenstrom größer ist als derjenige, welcher durch den ersten Strömungskanal strömt ergibt sich für den ersten Luftausströmer-Luftstrom eine Ausrichtung zum zweiten Luftausströmer hin.

Entsprechend ergibt sich für den zweiten Ausströmer-Luftstrom eine Ausrichtung auf den ersten Luftausströmer hin. Dies führt zu einer räumlichen konzentrierten oder räumlich fokussierten kombinierten Ausströmcharakteristik von erstem und zweitem Luftausströmer. Eine vergleichsweise kleine Stelle oder ein vergleichsweise kleiner Bereich im Innenraum des Kraftfahrzeugs, beispielsweise der Oberkörper des Fahrers oder des Beifahrers kann so mit einer vergleichsweise konzentrierten bzw. intensiven Luftströmung beaufschlagt werden.

Durch eine Veränderung des Verhältnisses der Luftmassenströme im ersten und im zweiten Verteilerkanal und damit auch im ersten und zweiten Strömungskanal des hiermit in Strömungsverbindung stehenden Luftausströmers kann die Richtung der jeweiligen Ausströmer-Luftströme bedarfsgerecht verändert werden.

Nach einer weiteren Ausgestaltung der Belüftungsanordnung sind der erste Luftausströmer und der zweite Luftausströmer voneinander beabstandet im Innenraum des Kraftfahrzeugs anordenbar. Der zweite Strömungskanal des ersten Luftausströmers ist an einer dem zweiten Luftausströmer abgewandten Seite des ersten Luftausströmers angeordnet. Der zweite Strömungskanal des zweiten Luftausströmers ist an einer dem ersten Luftausströmer abgewandten Seite des zweiten Luftausströmers angeordnet. Zur Erzeugung einer diffusen oder räumlich divergierenden kombinierten Ausströmcharakteristik von erstem und zweitem Luftausströmer ist im ersten Verteilerkanal ein höherer Luftmassenstrom als im zweiten Verteilerkanal einstellbar.

Dementsprechend ist der Luftmassenstrom in den ersten Strömungskanälen von erstem und zweitem Luftausströmer höher als in den zweiten Strömungskanälen von erstem und zweitem Luftausströmer. Da der erste Strömungskanal zu seinem auslassseitigen Ende hin quer zur Hauptströmungsrichtung in Richtung zum zweiten Strömungskanal hin ausgerichtet ist ergibt sich bei einer überwiegend durch den ersten Strömungskanal vorgegebenen Strömungsrichtung des Ausströmer-Luftstroms eine von den übrigen Luftausströmern abgewandte Ausströmrichtung an den jeweiligen Luftausströmern.

Dies führt zu einer vergleichsweise divergierenden oder aufgefächerten Luft-Ausströmcharakteristik. Da insgesamt mehrere Luftausströmer über den Verteilerkanal in unmittelbarer Strömungsverbindung stehen kann durch die zeitgleiche bzw. synchrone Veränderung der Richtung der einzelnen Ausströmer-Luftströme sämtlicher oder zumindest einiger Luftausströmer die Ausströmcharakteristik sämtlicher bzw. einiger Luftausströmer einzig oder überwiegend durch die Veränderung der relativen Luftmassenströme im ersten und dem zweiten Verteilerkanal verändert bzw. eingestellt werden.

Nach einem weiteren Aspekt betrifft die vorliegende Erfindung ferner ein Kraftfahrzeug mit einer Kraftfahrzeugkarosserie und mit einem Kraftfahrzeuginnenraum. Das Kraftfahrzeug ist ferner mit einer zuvor beschriebenen Belüftungsanordnung versehen.

Ein für das hier vorgesehene Verfahren und die Belüftungsanordnung geeigneter Luftausströmer ist zur Anordnung im Innenraum eines Kraftfahrzeugs, beispielsweise im Bereich eines Armaturenbretts oder einer Mittelkonsole ausgebildet. Der Luftausströmer weist typischerweise ein Gehäuse mit einer Ausströmöffnung auf. Das Gehäuse weist ferner einen ersten Strömungskanal und einen zweiten Strömungskanal auf. Beide, d. h. der erste Strömungskanal und der zweite Strömungskanal münden in die Ausströmöffnung. Im Inneren des Gehäuses sind der erste Strömungskanal und der zweite Strömungskanal jedoch getrennt voneinander ausgestaltet.

Eine den ersten Strömungskanal begrenzende erste Seitenwand kann dabei mit einem ersten Auslassabschnitt unmittelbar an die Ausströmöffnung angrenzen. Gleiches gilt für den zweiten Strömungskanal. Der zweite Strömungskanal kann eine zweite, den zweiten Strömungskanal begrenzende Seitenwand aufweisen, die ebenfalls mit einem zweiten Auslassabschnitt unmittelbar an die Ausströmöffnung angrenzt. Das Gehäuse weist ferner eine Hauptströmungsrichtung auf oder gibt eine Hauptströmungsrichtung vor, entlang welcher die dem Luftausströmer zugeführte Luft in den Luftausströmer einströmen bzw. durch den Luftausströmer hindurch und aus dem Luftausströmer ausströmen kann. Der erste Auslassabschnitt der ersten Seitenwand verläuft bezogen auf die Hauptströmungsrichtung nicht parallel, d.h. unter einem vorgegebenen Winkel ungleich 0° oder 180°, zum zweiten Auslassabschnitt.

Mit anderen Worten weisen die erste Seitenwand und die zweite Seitenwand an ihren unmittelbar an die Ausströmöffnung angrenzenden ersten und zweiten Auslassabschnitten eine sich unter einem vorgegebenen Winkel zur Hauptströmungsrichtung erstreckende Ausrichtung auf. Der vorgegebene Winkel ist hierbei ungleich 0° bzw. ungleich 180°. Zumindest einer von erstem Auslassabschnitt und zweitem Auslassabschnitt kann hierbei nicht parallel zur Hauptströmungsrichtung verlaufen. Es können auch beide, erster und zweiter Auslassabschnitt nicht parallel zur Hauptströmungsrichtung verlaufen.

Dadurch dass zumindest eine erster unmittelbar an die Ausströmöffnung angrenzender Auslassabschnitt der Seitenwand zumindest eines der beiden Strömungskanäle unter einem vorgegebenen Winkel zur Hauptströmungsrichtung verläuft kann jener Seitenwandabschnitt eine Richtungsänderung für der hieran vorbeiströmende Luft bewirken, die der Ausrichtung des betreffenden und an die Ausströmöffnung unmittelbar angrenzenden Auslassabschnitts entspricht.

Indem ferner der erste und der zweite Strömungskanal unabhängig voneinander mit beispielsweise von einem Gebläse bereitgestellter Luft beaufschlagbar sind und dadurch dass der erste und der zweite Strömungskanal mit unterschiedlichen Luftmasseströmen beaufschlagbar sind kann im Endeffekt eine Veränderung der Ausströmcharakteristik des Luftausströmers allein durch die Variation der Luftmassenströme im ersten Strömungskanal und zweiten Strömungskanal bereitgestellt werden.

So kann beispielsweise der erste Auslassabschnitt die an ihm vorbeigeführte Luft entlang einer ersten Richtung aus der Ausströmöffnung leiten. Der zweite Auslassabschnitt kann dementsprechend die an ihm vorbeigeführte Luft entlang einer zweiten Richtung aus der Ausströmöffnung ausströmen lassen oder leiten. Die erste Richtung und die zweite Richtung sind hierbei nicht parallel. Sie weisen einen, durch die Gehäusegeometrie vorgegebenen Winkel zueinander auf. Wird die dem Luftausströmer zugeführte Luft beispielsweise ausschließlich dem ersten Strömungskanal zugeführt, so strömt die aus der Ausströmöffnung ausströmende Luft entlang der ersten Richtung. Wird die dem Gehäuse zugeführte Luft ausschließlich über den zweiten Strömungskanal geleitet, so ist der aus der Ausströmöffnung ausströmende Luftstrom im Wesentlichen entlang der zweiten Richtung ausgerichtet.

Durch Variation der Luftmassenströme und durch eine bedarfsgerechte veränderliche Aufteilung des Luftstroms in den ersten und den zweiten Strömungskanal kann auf diese Art und Weise die Ausströmrichtung und/oder Ausströmcharakteristik an der Ausströmöffnung variabel verändert werden.

Der erste Auslassabschnitt und der zweite Auslassabschnitt können ferner entlang der Hauptströmungsrichtung betrachtet aufeinander zu ausgerichtet sein. Es ist hierbei ausreichend, wenn lediglich einer von erstem und zweitem Auslassabschnitt unter einem vorgegebenen Winkel zur Hauptströmungsrichtung verläuft. Der andere von erstem und zweitem Auslassabschnitt kann hierbei auch parallel zur Hauptströmungsrichtung verlaufen. Es können aber auch beide, d. h. der erste und der zweite Auslassabschnitt bezogen auf die Hauptströmungsrichtung aufeinander zu ausgerichtet sein.

Die aufeinander zu ausgerichtete Ausgestaltung von erstem und zweitem Auslassabschnitt bewirkt, dass die über den ersten Strömungskanal ausströmende Luft in Richtung zum zweiten Strömungskanal geleitet wird. Umgekehrt kann die über den zweiten Strömungskanal ausströmende Luft transversal zur Haupt Strömungsrichtung betrachtet in Richtung zum ersten Strömungskanal geleitet oder umgelenkt werden.

Der Luftausströmer kann klappenfrei und/oder lamellenfrei und/oder frei von beweglichen Teilen ausgestaltet sein. Dies verleiht dem Luftausströmer zum einen ein besonderes Design. Die klappenfreie oder lamellenfreie Ausgestaltung des Luftausströmers erweist sich in herstellungstechnischer Hinsicht als besonders vorteilhaft. Der Luftausströmer kann hierdurch ein besonders geringes Gewicht aufweisen und kann besonders kostengünstig hergestellt werden. Die Ausgestaltung ohne bewegliche Teile macht den Luftausströmer besonders dauerhaltbar und wenig störanfällig.

### Kurzbeschreibung der Figuren

Weitere Ziele, Merkmale sowie vorteilhafte Ausgestaltungen der vorliegenden Erfindung werden in der nachfolgenden Beschreibung eines Ausführungsbeispiels erläutert. Hierbei zeigen:
- Fig. 1: eine Seitenansicht eines Beispiels eines Luftausströmers,
- Fig. 2: einen Querschnitt durch den Luftausströmer gemäß Fig. 1,
- Fig. 3: eine vergrößerte Darstellung des Luftausströmers gemäß Fig. 2 im Bereich der Ausströmöffnung ,
- Fig. 4: eine perspektivische Außenansicht des Luftausströmers gemäß der Figuren 1 bis 3,
- Fig. 5: eine perspektivische Darstellung eines Montageträgers mit mehreren daran angeordneten bzw. integrierten Luftausströmern,
- Fig. 6: einen Querschnitt entlang A-A gemäß Fig. 5,
- Fig. 7: einen Querschnitt B-B gemäß Fig. 5,
- Fig. 8: einen Querschnitt C-C gemäß Fig. 5,
- Fig. 9: ein Blockschaltbild einer Belüftungsanordnung des Kraftfahrzeugs,
- Fig. 10: eine schematische Darstellung einer Ventil-oder Klappenanordnung,
- Fig. 11: eine schematische Darstellung eines Luftausströmers bei ungleichmäßiger Beaufschlagung erster und zweiter Strömungskanäle mit ersten und zweiten Luftmasseströmen,
- Fig. 12: eine Darstellung des Luftausströmers gemäß Fig. 11 jedoch mit ersten und zweiten in etwa gleichstarken Luftmasseströmen,
- Fig. 13: eine weitere Darstellung des Luftausströmers mit unterschiedlichen ersten und zweiten Luftströmungen in den ersten und zweiten Strömungskanälen,
- Fig. 14: eine beispielhafte Anordnung mehrerer Luftausströmer im Innenraum eines Kraftfahrzeugs,
- Fig. 15: eine vereinfachte und schematische Darstellung einer möglichen Anordnung von insgesamt drei Luftausströmern in einer ersten Konfiguration,
- Fig. 16: eine schematische Darstellung gemäß Fig. 15 jedoch in einer zweiten Konfiguration und
- Fig. 17: eine weitere Darstellung von drei Luftausströmer in einer dritten Konfiguration,
- Fig. 18: eine schematische Darstellung eines mit der Belüftungsanordnung ausgestatteten Kraftfahrzeugs und
- Fig. 19: ein Flussdiagramm des Verfahrens zur Belüftung des Fahrzeuginnenraums

### Detaillierte Beschreibung

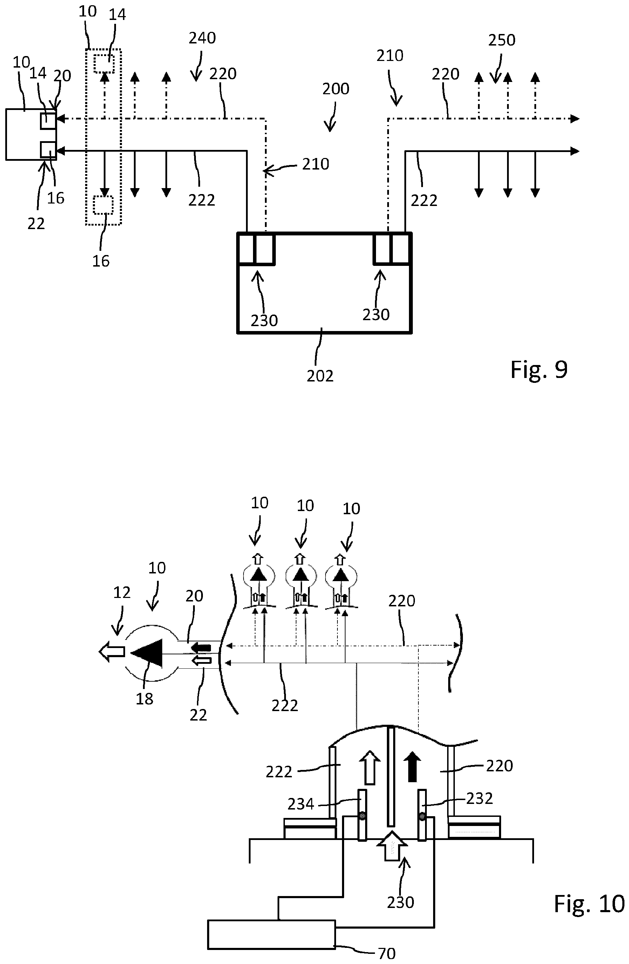

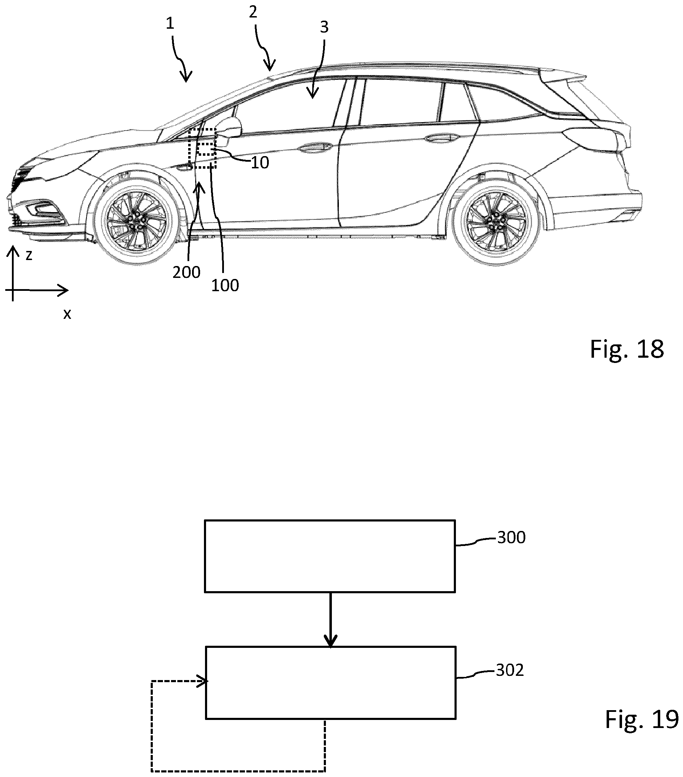

Das in Fig. 18 schematisch dargestellte Kraftfahrzeug 1 weist eine selbsttragende Kraftfahrzeugkarosserie 2 auf, die einen Innenraum 3 für die Fahrzeuginsassen bereitstellt. Im Innenraum 3 ist zumindest ein Luftausströmer 10 angeordnet, welcher mit einer in den Figuren 9 und 10 schematisch dargestellten Belüftungsanordnung 200 strömungstechnisch gekoppelt ist.

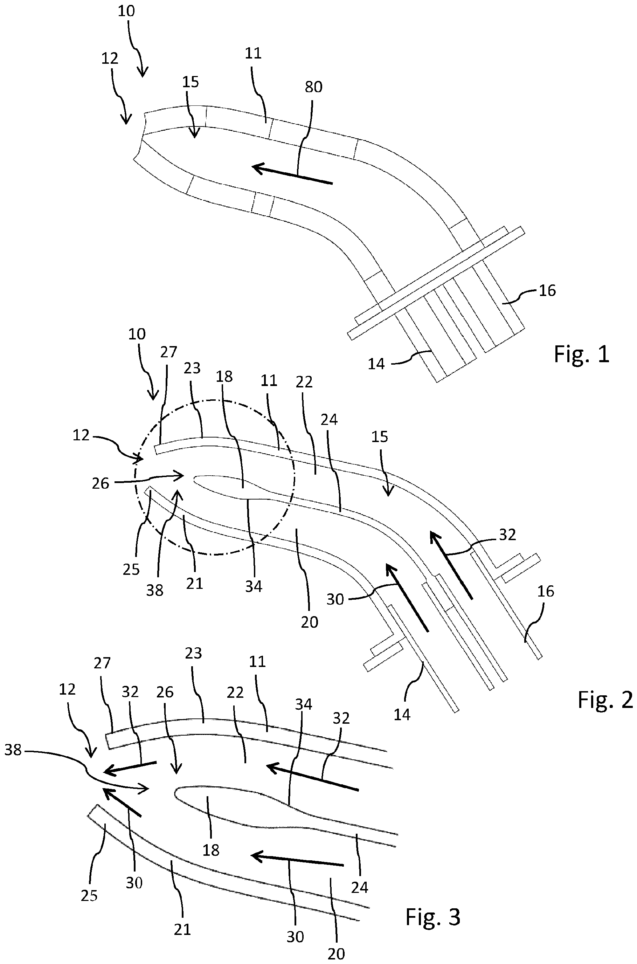

In den Figuren 1 bis 4 ist ein Beispiel eines Luftausströmers 10 gezeigt. Der Luftausströmer 10 weist ein Gehäuse 11 mit einer Auslassöffnung 12 auf. Einlassseitig weist der Luftausströmer 10 einen ersten Lufteinlass 14 und einen zweiten Lufteinlass 16 auf. Die beiden Lufteinlässe 14, 16 sind getrennt voneinander jeweils mit einem ersten Verteilerkanal 220 und mit einem zweiten Verteilerkanal 222 des in den Figuren 9 und 10 schematisch dargestellten Luftverteilers 210 strömungstechnisch verbindbar.

Der Luftverteiler 210 weist quasi zwei unabhängige Stränge in Form der Verteilerkanäle 220, 222 auf. Der Luftverteiler 210 ist strömungstechnisch mit einem Gebläse 202 der Belüftungsanordnung 200 verbunden. Im Luftverteiler 210 oder im Gebläse 202 ist eine Klappen- oder Ventilanordnung 230 angeordnet. Diese kann eine oder mehrere Klappen 232, 234 aufweisen, die unabhängig voneinander oder auch abhängig voneinander verstellbar sind. Auf diese Art und Weise können stromabwärts der Klappen-oder Ventilanordnung unterschiedliche Luftmassenströme in die Verteilerkanäle 220, 222 eingeleitet werden.

Wie insbesondere in Fig. 2 dargestellt geht der erste Lufteinlass 14 in einen ersten Strömungskanal 20 über. Der zweite Lufteinlass 16 geht im Innenraum 15 des Gehäuses 11 in einen zweiten Strömungskanal 22 über. Die beiden Strömungskanäle 20, 22 sind über eine Trennwand 24 voneinander separiert, insbesondere strömungstechnisch voneinander getrennt.

Der erste Strömungskanal 20 weist eine erste Seitenwand 21 auf, die über einen ersten stromabwärtsseitiges Auslassabschnitt 25 unmittelbar an die Ausströmöffnung 12 angrenzt. Gleichermaßen weist auch der zweite Strömungskanal 22 eine zweite Seitenwand 23 auf, die mit einem zweiten Auslassabschnitt 27 unmittelbar an die Ausströmöffnung 12 angrenzt. Wie insbesondere in den Figuren 2 und 3 gezeigt verlaufen sowohl der erste Auslassabschnitt 25 als auch der zweite Auslassabschnitt 27 unter einem vorgegebenen Winkel geneigt zu einer Hauptströmungsrichtung 80, wie diese von der Grundform des Gehäuses 11 vorgegeben wird. Die Hauptströmungsrichtung 80 kann beispielsweise entlang einer Flächennormalen der Querschnittsebene der Ausströmöffnung 12 verlaufen bilden oder hiermit zusammenfallen.

Wie insbesondere in den Figuren 2 und 3 verdeutlicht strömt ein erster Luftstrom 30 durch den ersten Strömungskanal 20. Ein zweiter Luftstrom 32 strömt durch den zweiten Strömungskanal 22. In Richtung zum Auslass 12 erfährt der erste Luftstrom 30 durch die Krümmung oder durch die nach innen gerichtete Neigung des ersten Auslassabschnitts 25 eine von der Hauptströmungsrichtung 80 abweichende Ausrichtung unmittelbar angrenzend an die Ausströmöffnung 12.

Gleiches gilt für den zweiten Luftstrom 32. Wie insbesondere in Fig. 3 verdeutlicht kreuzen sich der erste Luftstrom 30 und der zweite Luftstrom 32 unmittelbar angrenzend an die Ausströmöffnung 12. Ein virtueller Kreuzungsbereich von erstem und zweitem Luftstrom 30, 32 kann hierbei in etwa in der Ebene der Ausströmöffnung 12 liegen.

Wie in Fig. 3 verdeutlicht erfährt der erste Luftstrom 30 eine nach oben gerichtete Ausrichtung. Der zweite Luftstrom 32 erfährt eine nach unten gerichtete Ausrichtung. Mithin wird der erste Luftstrom 30 in Richtung zum zweiten Strömungskanal 22 umgelenkt. Der zweite Luftstrom 32 wird in Richtung zum ersten Strömungskanal 20 umgelenkt. Wenn nun die Luftmassenströme in dem ersten Strömungskanal 20 und dem zweiten Strömungskanal 22 bedarfsgerecht verändert werden kann die Ausströmcharakteristik im Bereich der Ausströmöffnung 12 entweder überwiegend von dem beispielsweise nach oben gerichteten ersten Luftstrom 30 oder von dem nach unten gerichteten zweiten Luftstrom 32 bestimmt sein. Je nach Anordnung der Ausströmöffnung 12 und des Luftausströmers 10 im Fahrzeuginnenraum kann hierdurch eine bedarfsgerechte Richtungsänderung der aus der Ausströmöffnung 12 ausströmenden Luft bereitgestellt werden.

Die Variation des Ausströmwinkels kann ferner durch Bereitstellen eines Strömungskörpers 18 am freien Ende der Trennwand 26 verstärkt werden. Der Strömungskörper 18 kann eine ballige, etwa tragflächenartige Verdickung der Trennwand 24 bereitstellen. Insbesondere kann der Strömungskörper 18 eine zum Beispiel konvex gekrümmte Anströmfläche 34 aufweisen, die in zumindest einen oder in beide Strömungskanäle 20, 22 hineinragt. Ferner liegt das Ende 26 der Trennwand 24 in einem vorgegebenen Abstand zur Ausströmöffnung 12. Auf diese Art und Weise kann eine Vereinigung der beiden Strömungskanäle 20, 22 noch innerhalb des Gehäuses 11 erfolgen. Sollte die aus dem Luftausströmer 10 ausströmende Luft beispielsweise in Richtung der Hauptströmungsrichtung 80 ausströmen, so kann dies durch in etwa gleich starke Volumenströme im ersten Strömungskanal 20 und im zweiten Strömungskanal 22 bewirkt werden. Die entsprechende ersten und zweiten Luftströmungen 30, 32 können sich insoweit noch innerhalb des Gehäuses 11 und damit stromaufwärts der Ausströmöffnung 12, etwa in einer Mischkammer 38 mischen.

Des Weiteren kann durch oder mittels des Strömungskörpers 80 der Strömungsquerschnitt im ersten Strömungskanal 20 und/oder im zweiten Strömungskanal 22 weiter verringert werden, wodurch die dem Luftausströmer 10 zugeführte Luft beschleunigt und bedarfsgerecht ausgerichtet werden kann.

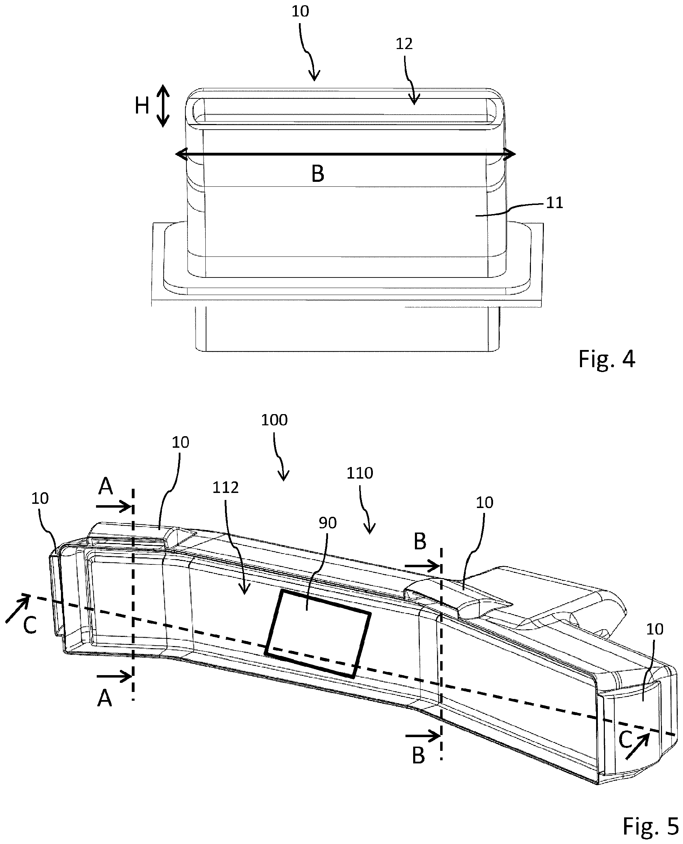

In der perspektivischen Darstellung gemäß Fig. 4 ist gezeigt, dass die Ausströmöffnung 12 ein Höhen- zu Breitenverhältnis H/B von kleiner 1/5 oder kleiner als 1/10 aufweisen kann. Mithin kann die Auslassöffnung 12 als Ausströmschlitz ausgestaltet sein. Die Trennwand 24, gegebenenfalls auch der Strömungskörper 18 können sich hierbei bei über die gesamte Breite B der Ausströmöffnung 12 erstrecken.

In den Figuren 5 bis 8 ist ferner die Integration mehrerer Luftausströmer 10 in einen Trägerkörper 110 eines Montageträgers 100 gezeigt. Der Montageträger 100 kann in Form eines ein- oder mehrteiligen Kunststoffspritzgussbauteils ausgestaltet sein. Er kann insbesondere eine Aufnahme 112, etwa zur Aufnahme von einem oder von mehreren Funktionsbauteilen 90 aufweisen. Als Funktionsbauteile 90 kommen insbesondere ein Display, eine Anzeige oder diverse Betätigungselementen für die Kraftfahrzeuginsassen infrage. Die Aufnahme 112 kann insbesondere rahmenartig ausgestaltet sein. Sie kann einen Montagerahmen für ein oder für mehrere Funktionsbauteile 90 bereitstellen.

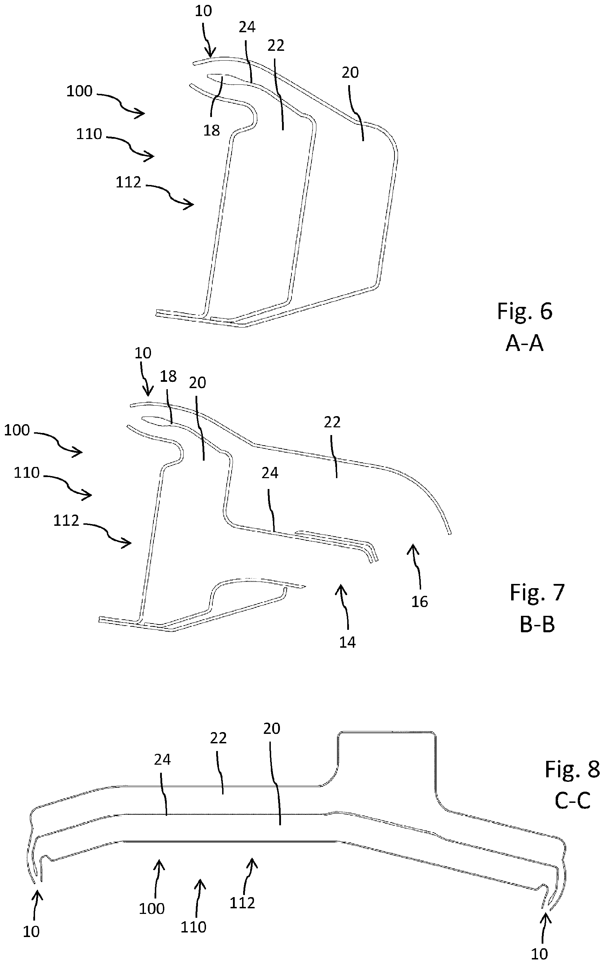

Der Trägerkörper 110 ist, wie in Fig. 5 gezeigt, mit mehreren Luftausströmern 10 versehen. Diese können einteilig in den Trägerkörper 110 integriert sein. Wie im Querschnitt gemäß der Fig. 8 gezeigt kann an den beiden seitlichen äußeren Enden des Trägerkörpers 110 jeweils ein Luftverteiler 10 angeordnet sein. Diese können miteinander in Strömungsverbindung stehen und können jeweils über ihren ersten Strömungskanal 20 und über ihren zweiten Strömungskanal 22 strömungstechnisch unmittelbar miteinander gekoppelt sein. Der Montageträger 100 kann, wie in Fig. 7 gezeigt, einen ersten Lufteinlass 14 und einen zweiten Lufteinlass 16 aufweisen, die jeweils mit einem ersten Strömungskanal 20 und mit einem zweiten Strömungskanal 22 strömungstechnisch verbunden, insbesondere einteilig ausgestaltet sein können.

Die in den Figuren 5 bis 8 gezeigte Integration eines oder mehrere Luftausströmer 10 in einen Trägerkörper 110 eines Montageträgers 100 zeigt, dass unterschiedlich konfigurierte Luftausströmer 10 an beliebigen Stellen in einem Montageträger integriert werden können. Der Montageträger 100 kann hierbei Teile des Luftverteilers 210 übernehmen und insoweit lediglich einen ersten Lufteinlass 14 und einen zweiten Lufteinlass 16 aufweisen. Eine gesonderte strömungstechnische Verbindung zwischen einzelnen Luftausströmern 10 und Luftverteilern 210 der Belüftungsanordnung 200 muss im Zuge der Kraftfahrzeugendmontage nicht mehr manuell erfolgen. Insoweit können Montage- und Herstellungskosten weiter reduziert werden.

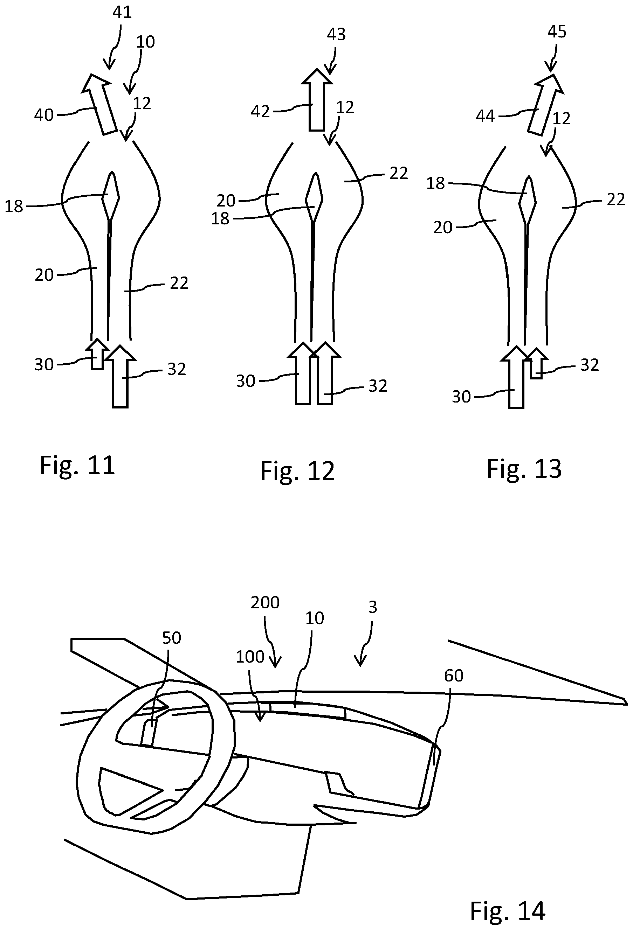

In den Figuren 11 bis 13 ist das Verfahren zur Belüftung des Kraftfahrzeugsinnenraums konzeptionell anhand eines ersten Luftausströmers 10 exemplarisch gezeigt. Der in den Figuren 1 bis 3 weitaus detaillierter dargestellte Luftausströmer ist in den Figuren 11 bis 13 etwas vereinfacht wiedergegeben.

Erweist einen ersten Strömungskanal 20 und einen zweiten Strömungskanal 22 auf, die beide in eine gemeinsame Ausströmöffnung 12 des Luftausströmers 10 münden. Bezogen auf eine Hauptströmungsrichtung, welche beispielsweise durch die Längserstreckung des Luftausströmers 10 vorgegeben ist, erstreckt sich das auslassseitige Ende des ersten Strömungskanals 20 in Richtung zum zweiten Strömungskanal 22. Umgekehrt erstreckt sich das auslassseitige Ende des zweiten Strömungskanal 22 in Richtung zum ersten Strömungskanal 20.

In Fig. 11 ist eine Konfiguration des Luftausströmers 10 dargestellt, bei welcher der erste Strömungskanal 20 mit einem ersten Luftstrom 30 beaufschlagt ist und bei welcher der zweite Strömungskanal 22 mit einem zweiten Luftstrom 32 beaufschlagt ist. Erste und zweite Luftströme 30, 32 werden im Inneren des Luftausströmers 10 separat und getrennt voneinander zur Ausströmöffnung 12 geführt. Im Bereich der Ausströmöffnung oder unmittelbar angrenzend an die Ausströmöffnung 12 vereinigen sich der erste und der zweite Luftstrom 30, 32 zu einem Ausströmer-Luftstrom 40.

Dieser weist eine in Fig. 11 gezeigte erste Strömungsrichtung 41 auf. Wie ferner durch die Größe der Pfeile symbolisiert weist der erste Luftstrom 32 einen höheren Luftmassenstrom als der erste Luftstrom 30 auf. Demzufolge ist der Ausströmer-Luftstrom 40 an der Ausströmöffnung 12 richtungsmäßig im Wesentlichen durch die Ausströmrichtung des zweiten Luftstroms 32 bestimmt. Im vorliegend gezeigten Ausführungsbeispiel erstreckt sich das auslassseitige Ende des zweiten Strömungskanals 22 nach links oben. Dementsprechend und aufgrund der unterschiedlichen Luftmassenströme im ersten und den zweiten Strömungskanal 30, 32, insbesondere durch den höheren Luftmassenstrom im zweiten Strömungskanal 32 im Vergleich zum ersten Strömungskanal 30 ist auch der erste Ausströmer-Luftstrom 40 schräg nach oben ausgerichtet.

Wenn nun das Verhältnis der Luftmassenströme im ersten und dem zweiten Strömungskanal 20, 22 verändert wird, insbesondere wenn zum Beispiel der Luftmassenstrom im ersten Strömungskanal 20 in etwa betragsmäßig dem Luftmassenstrom im zweiten Strömungskanal 22 entspricht tragen beide Luftströme 30, 32 in etwa gleichermaßen zur Bildung eines zweiten Ausströmer-Luftstroms 42 bei, wie dies beispielhaft in Fig. 12 gezeigt ist. Dies kann insbesondere durch eine im Wesentlichen symmetrische oder spiegelsymmetrische Ausgestaltung von erstem und zweitem Strömungskanal 20, 22 in dem an die Ausströmöffnung 12 angrenzenden Bereich erzielt werden.

In Fig. 13 ist eine weitere Konstellation der Belüftungsanordnung 200 bzw. des ersten Luftausströmers 10 gezeigt, bei welcher anders als in der Konfiguration gemäß Fig. 11 der erste Luftstrom 30 einen höheren Luftmassenstrom als der zweite Luftstrom 32 aufweist. Dementsprechend bildet sich ein dritter Ausströmer-Luftstrom 44 im Bereich der Ausströmöffnung 12. Die Richtung 45 des dritten Ausströmer-Luftstroms 44 ist insbesondere durch die Ausrichtung des auslassseitigen Endes des ersten Strömungskanals 30 vorgegeben. Sie unterscheidet sich von den Strömungsrichtungen 41, 43 der Ausströmer-Luftströme 42, 44 der beiden in den Figuren 12 und 13 gezeigten Konfigurationen.

Insbesondere anhand eines Vergleichs der verschiedenen Konfigurationen gemäß der Figuren 11 bis 13 ist ersichtlich, dass durch Veränderung der Luftmassenströme in den ersten und zweiten Strömungskanälen 20, 22 relativ zueinander die Richtung des Ausströmer-Luftstroms 40, 42, 44 bedarfsgerecht verändert werden kann. Die unterschiedlichen Luftmassenströme können insbesondere mit einer bereits zuvor schematisch erläuterten Ventil- oder Klappenanordnung 230 erzeugt bzw. bedarfsgerecht verändert werden.

Besondere Vorteile der hier beschriebenen Möglichkeit zur Veränderung der Richtung eines Luftstroms ohne bewegliche Klappen-oder Lamelle am Auslass eines Luftausströmers ergeben sich insbesondere wenn mehrere Luftausströmer 10, 50, 60 mit dem Luftverteiler 210 gekoppelt, bzw. von diesem gespeist sind.

Der Luftverteiler 210 weist, wie bereits zu den Figuren 9 und 10 dargestellt, einen ersten Verteilerkanal 220 und einen zweiten Verteilerkanal 222 auf. Die ersten Strömungskanäle 20 der unterschiedlichen und typischerweise beabstandet voneinander im Innenraum 3 angeordneten Luftausströmer 10, 50, 60 sind hierbei sämtlichst, und ggf. ausschließlich mit dem ersten Verteilerkanal 220 strömungstechnisch gekoppelt. Die zweiten Strömungskanäle 220 der zum Beispiel in Fig. 14 räumlich getrennt voneinander angeordneten Luftausströmer 10, 50, 60 sind sämtlichst, ggf. ausschließlich über den zweiten Verteilerkanal 222 miteinander strömungstechnisch gekoppelt.

Die Ventil- oder Klappenanordnung 230 kann im Luftverteiler 210, insbesondere in einem oder in beiden Verteilerkanälen 220, 222 angeordnet sein. Sie kann aber auch und insbesondere stromaufwärts des Luftverteilers 210, etwa im Übergang zwischen einem Gebläse 202 und dem Luftverteiler 210 angeordnet sein. Der Luftverteiler 210 kann mehrere Stränge mit jeweils einem ersten Verteilerkanal 220 und einen zweiten Verteilerkanal 222 aufweisen. So kann beispielsweise ein erster Luftverteilerstrang 240 für den linken Kraftfahrzeugbereich ausgestaltet sein während ein weiterer, etwa ein zweiter Luftverteilerstrang 250 ausschließlich für den rechten Kraftfahrzeugbereich ausgestaltet bzw. vorgesehen ist. Unterschiedliche Stränge des Luftverteilers 210 können separat und unabhängig voneinander mit beispielsweise vom Gebläse 202 zugeführter Gebläseluft oder mit vom Fahrtwind abgezweigter Frischluft beaufschlagt werden.

Der erste Luftverteilerstrang 240 und der zweite Luftverteilerstrang 250 können von einem gemeinsamen Gebläse 202 oder von zwei unterschiedlichen und voneinander entkoppelten Gebläsen gespeist bzw. beaufschlagt werden. Die linke Fahrzeugseite, welche mit dem ersten Luftverteilerstrang 240 versehen ist, kann unabhängig von der rechten Fahrzeugseite, welche mit dem zweiten Luftverteilerstrang 250 versehen ist, mit einem Luftmassenstrom beaufschlagt werden. Ein von einem Gebläse 202 zugeführter oder erzeugter Luftstrom kann ferner mittels einer Ventil- oder Klappenanordnung auf den ersten Luftverteilerstrang 240 und den zweiten Luftverteilerstrang 250 variabel, bzw. vom Benutzer einstellbar aufgeteilt werden. Somit ist es möglich, die Aufteilung eines Luftmassenstroms auf den ersten und den zweiten Luftverteilerstrang 240, 250 entsprechend einer Nutzervorgabe zu verändern. Beispielsweise kann ein ursprünglich auf die Fahrerseite gelenkter Luftmassenstrom auf die Beifahrerseite verlagert werden; und umgekehrt.

Einzelne Ventile oder Klappen 232, 234 der Ventil-oder Klappenanordnung 230 können beispielsweise mittels einer in Fig. 10 schematisch gezeigten Steuerung 70 betätigt werden. Die Steuerung 70 ermöglicht eine regelmäßige, schrittweise und/oder kontinuierliche Veränderung der Luftmassenströme im ersten Verteilerkanal 220 und im zweiten Verteilerkanal 222. Insbesondere können mit der zum Beispiel elektromechanisch oder elektronisch implementierten Steuerung 70 kontinuierliche und/oder diskrete, zeitlich variierende Luftmassenströme im ersten und im zweiten Verteilerkanal 220, 222 programmgesteuert generiert werden. Mittels der Steuerung und der hiermit erzeugbaren gleichzeitigen Variation der Richtung der aus den einzelnen Luftausströmer 10, 50, 60 ausströmenden Luft kann quasi eine Art Fan-Modus für die im Innenraum 3 des Kraftfahrzeugs umzuwälzende Luft zur Verfügung gestellt werden.

Alternativ hierzu kann ein Luftmassenstrom im ersten Verteilerkanal 220 vollkommen entkoppelt vom Luftmassenstrom im zweiten Verteilerkanal 222 sein. Die betreffenden Luftmassenströme in den ersten und zweiten Verteilerkanälen 220, 222 können auch jeweils von einem gesonderten Gebläse 202 erzeugt und dementsprechend bereitgestellt werden.

Ferner ist denkbar, einzelne Sitze oder Bereiche des Kraftfahrzeugs mit Sensoren auszustatten, die dazu ausgestaltet sind, zu detektieren, ob der betreffende Sitz oder Bereich des Kraftfahrzeugs von einem Fahrgast besetzt ist. Auf Basis dieser Informationen kann die mit den betreffenden Sensoren datentechnisch verbundene Steuerung 70 dazu ausgestaltet sein, einzelne Bereiche des Fahrzeuginnenraums von einer aktiven Belüftung zu entkoppeln. So können beispielsweise einzelne oder sämtliche im Bereich eines unbesetzten Platzes angeordnete Luftausströmer bedarfsgerecht abgeschaltet oder deaktiviert bzw. angeschaltet oder aktiviert werden.

In Fig. 19 ist das Verfahren zur Belüftung des Kraftfahrzeugs Innenraums 3 anhand eines Flussdiagramms schematisch dargestellt. In einem ersten Schritt 300 wird der erste Strömungskanal 20 mit einem ersten Luftstrom 30 beaufschlagt. Gleichzeitig wird der zweite Strömungskanal 22 mit einem zweiten Luftstrom 32 beaufschlagt. Es stellt sich entsprechend der Luftmassenverhältnisse im ersten und im zweiten Strömungskanal 20, 22 ein Ausströmer-Luftstrom 40 mit einer ersten Strömungsrichtung 41 im Bereich der Ausströmöffnung 12 des ersten Luftverteilers 10 ein. Im nachfolgenden Schritt 302 wird der Luftmassenstrom des ersten Luftstroms 30 relativ zum Luftmassenstrom des zweiten Luftstroms 32 verändert.

Beispielsweise kann eine Konfiguration gemäß der Fig. 12 oder gemäß der Fig. 13 eingestellt werden. Es ergibt sich demzufolge ein zweiter Ausströmer-Luftstrom 42 oder auch ein dritter Ausströmer-Luftstrom 44, wie diese in den Figuren 12 und 13 schematisch dargestellt sind. Der zweite Ausströmer-Luftstrom 42 strömt entlang einer zweiten Strömungsrichtung 43, die sich von der ersten Strömungsrichtung 41 unterscheidet. Gleiches gilt auch für den dritten Ausströmer-Luftstrom 44, welcher eine dritte Strömungsrichtung 45 aufweist. Der Schitt des Veränderns des Luftmassenstroms 302 kann wiederholt, typischerweise mit einer jeweils anderen relativen Veränderung der ersten und zweiten Luftmassenströme durchgeführt werden, um entweder bedarfsgerecht, d. h. der Eingabe eines Nutzers folgend, oder aber entsprechend einem durch eine Steuerung 70 vorgegebenen automatisierten Prozess die Ausströmcharakteristik eines oder mehrerer Luftausströmer 10, 50, 60 im Innenraum 3 des Kraftfahrzeugs 1 zu verändern.

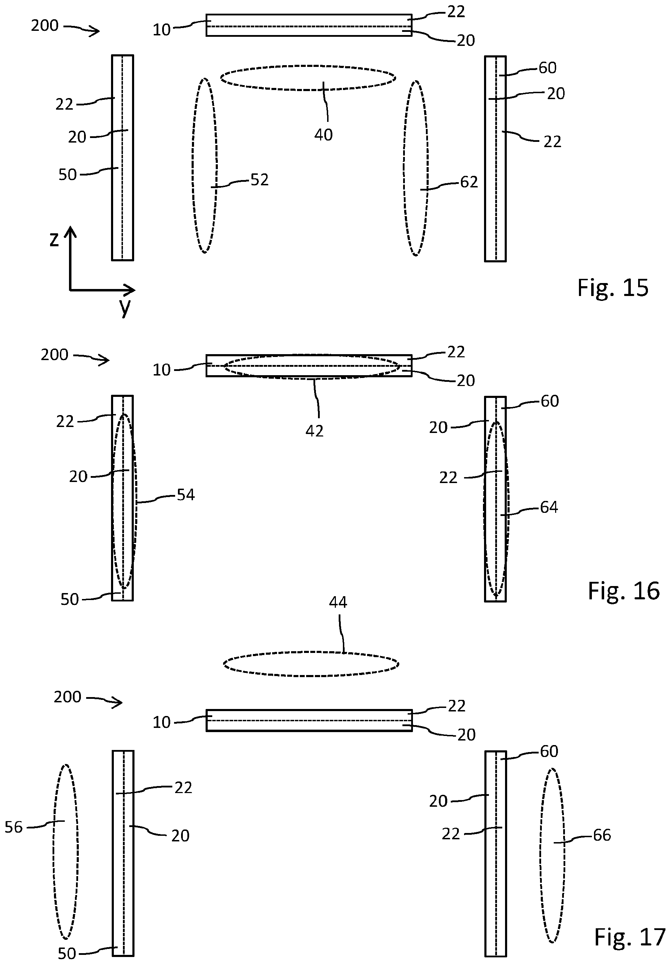

In den Figuren 15 bis 17 ist ein weiteres Beispiel einer Belüftungsanordnung 200 dargestellt. Diese weist insgesamt 3 Luftverteiler 10, 50, 60 auf. Der erste Luftverteiler ist beispielsweise bezogen auf die Kraftfahrzeughochachse (z) und die Kraftahrzeugquerachse (y) in etwa horizontal, mit einer Längsrichtung entlang der Fahrzeugquerachse ausgerichtet, so wie dies beispielsweise auch in Fig. 10 bei einer unmittelbaren Anordnung der Luftausströmer 10, 50, 60 an der Instrumententafel angedeutet ist.

Die beiden weiteren Luftverteiler 50, 60 sind in Fahrzeugquerrichtung voneinander beabstandet und in Vertikalrichtung, d. h. im Wesentlichen entlang der Fahrzeughochachse (z) ausgerichtet. Der Abstand der zweiten und dritten Luftausströmer 50, 60 ist hierbei größer gewählt als die Längserstreckung des ersten Luftausströmers entlang der Fahrzeugquerachse. Die Luftausströmer 10, 50, 60 weisen eine Ausströmöffnung 12 auf, die ein Höhen- zu Breitenverhältnis H/B größer als 2, größer als 3, größer als 5 oder größer als 10 aufweist.

Die zweiten und dritten Luftausströmer 50, 60 erstrecken sich in etwa parallel zueinander. Der erste Luftausströmer 10 erstreckt sich in etwa um 90° gedreht zum zweiten Luftausströmer 50 bzw. zum dritten Luftausströmer 60. Die Darstellungen in den Figuren 15 bis 17 sind frontal auf die typischerweise in der Instrumententafel oder der Kraftfahrzeug-Innenraumverkleidung integrierten Luftausströmer 10, 50, 60 gerichtet. Die Perspektive in den Figuren 15 bis 17 ist somit der Hauptströmungsrichtung entgegengerichtet. Sämtliche im Querschnitt in etwa rechteckig oder oval ausgestalteten Luftausströmer 10, 50, 60 weisen die zuvor beschriebenen ersten und zweiten Strömungskanäle 20, 22 auf.

Die ersten und die zweiten Strömungskanäle 20, 22 erstrecken sich ebenfalls entlang der gesamten Längsrichtung der Ausströmöffnung und 12 der einzelnen Luftausströmer 10, 50, 60. Es ist hierbei vorgesehen, dass die ersten Strömungskanäle 20 von erstem Luftausströmer 10, zweitem Luftausströmer 50 und drittem Luftausströmer 60 an einer den übrigen Luftausströmern jeweils zugewandten Seite des jeweiligen Luftausströmers angeordnet sind. Der erste Strömungskanal 20 des ersten Luftausströmers 10 ist den beiden übrigen Luftausströmern 50, 60 zugewandt. Der zweite Strömungskanal 22 des ersten Luftausströmers 10 ist in beiden übrigen Luftausströmer 50, 60 abgewandt angeordnet. Selbiges o. ä. trifft für die zweiten und dritten Luftausströmer 50, 60 zu.

Im Detail ist der erste Strömungskanal 20 des zweiten Luftausströmers 50 sowohl dem ersten Luftausströmer 10 als auch dem dritten Luftausströmer 60 zugewandt. Der zweite Strömungskanal 22 des zweiten Luftausströmers 50 ist hingegen den beiden übrigen Luftausströmern 10, 60 abgewandt angeordnet. Der erste Strömungskanal 20 des dritten Luftausströmers 60 ist sowohl dem ersten Luftausströmer 10 als auch dem zweiten Luftausströmer 50 zugewandt während dessen zweiter Strömungskanal 22 an einer dem ersten Luftausströmer 10 und dem zweiten Luftausströmer 50 abgewandten Seite des dritten Luftausströmer 60 angeordnet ist.

Anhand Fig. 15 ist schließlich eine erste Konfiguration oder ein erster Betriebsmodus der Belüftungsanordnung 200 dargestellt. Die ovalen Kreise symbolisieren die Lage bzw. Position der einzelnen Ausströmer-Luftströme 40, 52, 62 der jeweilige ersten, zweiten und dritten Luftausströmer 10, 50, 60 in einem vorgegebenen Abstand von der jeweiligen Ausströmöffnung 12 im Innenraum 3 des Kraftfahrzeugs 1.

In dieser Konfiguration ist der Luftmassenstrom im zweiten Strömungskanal 22 der hier dargestellte Luftausströmer 10, 50, 60 jeweils stärker als der Luftmassenstrom im ersten Strömungskanal 20 von erstem, zweitem und drittem Luftausströmer 10, 50, 60. Demzufolge ist der Ausströmer-Luftstrom 40 des ersten Luftausströmers in Richtung zu den zweiten und dritten Luftausströmer 50, 60 hin versetzt, bzw. zu den zweiten und dritten Luftausströmern 50, 60 hin ausgerichtet. Des Weiteren ist der Ausströmer-Luftstrom 52 des zweiten Luftausströmers 50 in Richtung zum dritten Luftausströmer 60 hin versetzt bzw. zum dritten Luftausströmern 60 hin ausgerichtet. Der Ausströmer-Luftstrom 62 des dritten Luftausströmers 60 ist schließlich ebenfalls zum gegenüberliegenden zweiten Luftausströmer 50 hin versetzt bzw. zum dritten Luftausströmer 60 hin ausgerichtet.

Es ergibt sich eine vergleichsweise räumlich konzentriertes Spot-Anström- oder Ausströmcharakteristik der Anordnung der vorliegend implementierten Luftausströmer 10, 50, 60. Diese Konfiguration entspricht im Wesentlichen geht in Fig. 11 gezeigten Bertriebsmodus, bei welchem der Ausströmer-Luftstrom 40 im Wesentlichen durch den durch den zweiten Strömungskanal 22 strömenden zweiten Luftstrom 32 bestimmt ist.

In Fig. 16 ist ein Szenario gezeigt, welches im Wesentlichen der Konfiguration gemäß Fig. 12 entspricht. Hier sind die beiden Luftströme 30, 32 in den Strömungskanälen 20, 22 der jeweiligen Luftausströmer 10, 50, 60 in etwa gleich stark. Dies führt zu einer vergleichsweise geradlinigen Ausströmcharakteristik. Die Position der einzelnen Ausströmer-Luftströme 42, 54 und 64 60 ist in einem vorgegebenen Abstand von der jeweiligen Ausströmöffnung 12 im Wesentlichen deckungsgleich mit der Position und/oder geometrischen Ausgestaltung der einzelnen Luftausströmer 10, 50, 60. Das kombinierte bzw. das gesamte Ausströmverhalten, welches durch Superposition der einzelnen Ausströmer-Luftströme 42, 54, 64 bestimmt ist, entspricht im Wesentlichen der räumlichen Anordnung der einzelnen Luftausströmer 10, 50, 60 im Innenraum 3 des Kraftfahrzeugs 1.

In Fig. 17 ist schließlich eine Konfiguration gemäß der Fig. 13 mit mehreren Luftausströmer 10, 50, 60 gezeigt. Hierbei ist der Luftmassenstrom 30 im ersten Strömungskanal 20 sämtlicher Luftausströmer 10, 50, 60 größer als der Luftmassenstrom im jeweils zweiten Strömungskanal 32. Demzufolge ergeben sich voneinander divergierende Strömungsrichtung für die einzelnen Ausströmer-Luftströme 44, 56, 66. Verglichen mit der Konfiguration gemäß Fig. 16 ist der Ausströmer-Luftstrom 44 des ersten Luftausströmers 10 von den beiden übrigen Luftausströmern 50, 60 abgewandt. Selbiges trifft für die Ausströmer-Luftströme 56 und 66 der beiden übrigen Luftausströmer 50, 60 zu. Der Ausströmer-Luftstrom 56 strömt in eine vom ersten Luftausströmer 10 und vom dritten Luftausströmer 60 abgewandte Richtung. Auch der weitere Ausströmer-Luftstrom 66 des dritten Luftausströmers 60 weist in eine vom ersten Luftausströmer 10 und vom zweiten Luftausströmer 50 abgewandte Richtung.

Mit der zum Beispiel zentral im Luftverteiler 210 angeordneten Ventil- und Klappenanordnung können mit nur einem einzigen oder mit nur einigen wenigen Stellgliedern unterschiedliche Luftmassenströme im ersten und zweiten Verteilerkanal 220, 222 erzeugt werden, die jeweils mit mehreren Luftausströmern 10, 50, 60 strömungstechnisch in Verbindung stehen. Durch gezielte Veränderung der Luftmassenströme im ersten und im zweiten Verteilerkanal 220, 222 mittels der Ventil- und Klappenanordnung 230 können Luftausströmer-Luftströme 40, 52, 62 mehrerer Luftausströmer 10, 50, 60 zeitgleich verändert werden.

Die dargestellten Ausführungsformen zeigen lediglich mögliche Ausgestaltungen der Erfindung, zu welcher im Rahmen der Erfindung weitere zahlreiche Varianten denkbar sind. Die exemplarisch gezeigten Ausführungsbeispiele sind in keiner Weise hinsichtlich des Umfangs, der Anwendbarkeit oder der Konfigurationsmöglichkeiten der Erfindung als einschränkend auszulegen. Die vorliegende Beschreibung zeigt dem Fachmann lediglich eine oder einige mögliche Implementierung(en) eines Ausführungsbeispiels auf. So können an der Funktion und Anordnung von beschriebenen Elementen vielfältigste Modifikationen vorgenommen werden, ohne hierbei den durch die nachfolgenden Ansprüche definierten Schutzbereich zu verlassen.

### Bezugszeichenliste

- 1: Kraftfahrzeug
- 2: Kraftfahrzeugkarosserie
- 3: Innenraum
- 10: Luftausströmer
- 11: Gehäuse
- 12: Ausströmöffnung
- 14: Lufteinlass
- 16: Lufteinlass
- 18: Strömungskörper
- 20: Strömungskanal
- 22: Strömungskanal
- 24: Trennwand
- 25: Auslassabschnitt
- 26: Endabschnitt
- 27: Auslassabschnitt
- 30: Luftstrom
- 32: Luftstrom
- 34: Anströmfläche
- 38: Mischkammer
- 40: Ausströmer-Luftstrom
- 41: Strömungsrichtung
- 42: Ausströmer-Luftstrom
- 43: Strömungsrichtung
- 44: Ausströmer-Luftstrom
- 45: Strömungsrichtung
- 50: Luftausströmer
- 52: Ausströmer-Luftstrom
- 54: Ausströmer-Luftstrom
- 56: Ausströmer-Luftstrom
- 60: Luftausströmer
- 62: Ausströmer-Luftstrom
- 64: Ausströmer-Luftstrom
- 66: Ausströmer-Luftstrom
- 70: Steuerung
- 80: Hauptströmungsrichtung
- 90: Funktionsbauteil
- 100: Montageträger
- 110: Trägerkörper
- 112: Aufnahme
- 200: Belüftungsanordnung
- 202: Gebläse
- 210: Luftverteiler
- 220: Verteilerkanal
- 222: Verteilerkanal
- 230: Ventil- oder Klappenanordnung
- 232: Klappe
- 234: Klappe
- 240: Luftverteilerstrang
- 250: Luftverteilerstrang

## Patentansprüche

1. Verfahren zur Belüftung eines Kraftfahrzeuginnenraums mit einer Belüftungsanordnung (200), wobei die Belüftungsanordnung (200) einen im Innenraum des Kraftfahrzeugs angeordneten ersten Luftausströmer (10) mit einem ersten Strömungskanal (20) und mit einem zweiten Strömungskanal (22) aufweist, wobei der erste und der zweite Strömungskanal (20, 22) des ersten Luftausströmers (10) strömungstechnisch voneinander getrennt sind und unter unterschiedlichen Winkeln in eine Ausströmöffnung (12) des ersten Luftausströmers (10) münden, wobei die Belüftungsanordnung (200) einen zweiten Luftausströmer (50, 60) aufweist, welcher beabstandet zum ersten Luftausströmer (10) angeordnet ist, **dadurch gekennzeichnet, dass** der zweite Luftausströmer (50, 60) einen ersten Strömungskanal (20) und einen zweiten Strömungskanal (22) aufweist, wobei der erste und der zweite Strömungskanal (20, 22) des zweiten Luftausströmers (50, 60) strömungstechnisch voneinander getrennt sind und unter unterschiedlichen Winkeln in eine Ausströmöffnung (12) des zweiten Luftausströmers (50, 60) münden und wobei die ersten Strömungskanäle (20) von erstem und zweitem Luftausströmer (10, 50, 60) mittels eines ersten Verteilerkanals (220) eines Luftverteilers (210) strömungstechnisch miteinander gekoppelt sind und wobei die zweiten Strömungskanäle (22) von erstem und zweitem Luftausströmer (10, 50, 60) mittels eines zweiten Verteilerkanals (222) des Luftverteilers (210) strömungstechnisch miteinander gekoppelt sind, wobei das Verfahren die folgenden Schritte umfasst:
- Beaufschlagen des ersten Strömungskanals (20) mit einem ersten Luftstrom (30) und/oder Beaufschlagen des zweiten Strömungskanals (22) mit einem zweiten Luftstrom (32) unter Bildung eines ersten Ausströmer-Luftstroms (40) an der Ausströmöffnung (12) des ersten Luftausströmers (10) und des zweiten Luftausströmers (50, 60), wobei der erste Ausströmer-Luftstrom (40) eine erste Strömungsrichtung (41) aufweist,
- Verändern des Luftmassenstroms des ersten Luftstroms (30) relativ zum Luftmassenstrom des zweiten Luftstroms (32) und Bildung eines zweiten Ausströmer-Luftstroms (42) an der Ausströmöffnung (12) des ersten Luftausströmers (10) und des zweiten Luftausströmers (50, 60), wobei der zweite Ausströmer-Luftstrom (42) eine zweite Strömungsrichtung (43) aufweist, die sich von der ersten Strömungsrichtung (41) unterscheidet,
- wobei zur gleichzeitigen Änderung der Strömungsrichtung der Ausströmer-Luftströme (40, 42, 44, 52, 54, 56, 62, 64, 66) des ersten Luftausströmers (10) und des zweiten Luftausströmers (50, 60) der Luftmassenstrom im ersten Verteilerkanal (220) relativ zum Luftmassenstrom im zweiten Verteilerkanal (222) verändert wird.

2. Verfahren nach Anspruch 1, wobei der Luftmassenstrom im ersten Strömungskanal (20) relativ zum Luftmassenstrom im zweiten Strömungskanal (22) regelmäßig und/oder kontinuierlich verändert wird.

3. Verfahren nach einem der vorhergehenden Ansprüche, wobei die Belüftungsanordnung (200) ein Gebläse (202) und eine Ventil- oder Klappenanordnung (230) aufweist und wobei mittels des Gebläses (202) ein Luftstrom erzeugt wird, der mittels der Ventil- oder Klappenanordnung (230) variabel und verstellbar in erste und zweite Luftströme (30, 32) aufgeteilt wird, die dem jeweiligen ersten und zweiten Verteilerkanal (220, 222) zugeführt werden.

4. Verfahren nach einem der vorhergehenden Ansprüche, wobei der erste Luftausströmer (10) und der zweite Luftausströmer (50, 60) beabstandet voneinander angeordnet sind und wobei der erste Strömungskanal (20) des ersten Luftausströmers (10) an einer dem zweiten Luftausströmer (50, 60) zugewandten Seite des ersten Luftausströmers (10) angeordnet ist und wobei der erste Strömungskanal (20) des zweiten Luftausströmers (50, 60) an einer dem ersten Luftausströmer (10) zugewandten Seite des zweiten Luftausströmers (50, 60) angeordnet ist und wobei zur Erzeugung einer kombinierten Spot-Ausströmcharakteristik von erstem und zweitem Luftausströmer (10, 50, 60) im zweiten Verteilerkanal (222) ein höherer Luftmassenstrom als im ersten Verteilerkanal (220) eingestellt wird.

5. Verfahren nach einem der vorhergehenden Ansprüche 1 bis 3, wobei der erste Luftausströmer (10) und der zweite Luftausströmer (50, 60) beabstandet voneinander angeordnet sind und wobei der zweite Strömungskanal (22) des ersten Luftausströmers (10) an einer dem zweiten Luftausströmer (50, 60) abgewandten Seite des ersten Luftausströmers (10) angeordnet ist und wobei der zweite Strömungskanal (22) des zweiten Luftausströmers (50, 60) an einer dem ersten Luftausströmer (10) abgewandten Seite des zweiten Luftausströmers (50, 60) angeordnet ist und wobei zur Erzeugung einer diffusen oder räumlich divergierenden kombinierten Ausströmcharakteristik von erstem und zweitem Luftausströmer (10, 50, 60) im ersten Verteilerkanal (220) ein höherer Luftmassenstrom als im zweiten Verteilerkanal (222) eingestellt wird.

6. Belüftungsanordnung (200) zur Belüftung eines Kraftfahrzeuginnenraums mit:
- einem ersten im Innenraum des Kraftfahrzeugs anordenbaren Luftausströmer (10) welcher einen ersten Strömungskanal (20) und einen zweiten Strömungskanal (22) aufweist, wobei der erste und der zweite Strömungskanal (20, 22) strömungstechnisch voneinander getrennt sind und unter unterschiedlichen Winkeln in eine Ausströmöffnung (12) des ersten Luftausströmers (10) münden,
- einen zweiten im Innenraum des Kraftfahrzeugs anordenbaren Luftausströmer (50, 60),
- einem Luftverteiler (210), welcher einen ersten Verteilerkanal (220) und einen zweiten Verteilerkanal (222) aufweist, wobei der erste Verteilerkanal (220) vom zweiten Verteilerkanal (222) strömungstechnisch getrennt ist, **dadurch gekennzeichnet, dass** der zweite Luftausströmer (50, 60) einen ersten Strömungskanal (20) und einen zweiten Strömungskanal (22) aufweist, wobei der erste und der zweite Strömungskanal (20, 22) strömungstechnisch voneinander getrennt sind und unter unterschiedlichen Winkeln in eine Ausströmöffnung (12) des zweiten Luftausströmers (50, 60) münden, wobei die ersten Strömungskanäle (20) von erstem und zweitem Luftausströmer (10, 50, 60) mittels des ersten Verteilerkanals (220) strömungstechnisch miteinander gekoppelt sind, wobei die zweiten Strömungskanäle (22) von erstem und zweitem Luftausströmer (10, 50, 60) mittels des zweiten Verteilerkanals (222) strömungstechnisch miteinander gekoppelt sind und wobei zur gleichzeitigen Änderung einer Richtung der Ausströmer-Luftströme (40, 42, 44, 52, 54, 56, 62, 64, 66) des ersten Luftausströmers (10) und des zweiten Luftausströmers (50, 60) der Luftmassenstrom im ersten Verteilerkanal (220) relativ zum Luftmassenstrom im zweiten Verteilerkanal (222) variabel ist.

7. Belüftungsanordnung (200) nach Anspruch 6, welche ferner ein Gebläse (202) zur Erzeugung eines Luftstroms und welche eine Ventil- oder Klappenanordnung (230) aufweist, mittels welcher der Luftstrom variabel und verstellbar in erste und zweite Luftströme (30, 32) für den ersten Verteilerkanal (220) und für den zweiten Verteilerkanal (222) aufteilbar ist.

8. Belüftungsanordnung (200) nach Anspruch 6 oder 7, welche ferner eine Steuerung (70) aufweist, mittels welcher der Luftmassenstrom im ersten Verteilerkanal (220) relativ zum Luftmassenstrom im zweiten Verteilerkanal (222) regelmäßig, und/oder kontinuierlich variierbar ist.

9. Belüftungsanordnung (200) nach einem der vorhergehenden Ansprüche 6 bis 8, wobei die Ausströmöffnung (12) des ersten Luftausströmers (10) und des zweiten Luftausströmers (50, 60) eine Querschnittsgeometrie mit einer Höhe H und mit einer Breite B aufweist, und wobei ein Breiten- zu Höhenverhältnis B/H oder ein Höhen- zu Breitenverhältnis H/B größer als 1, größer als 2, größer als 3, größer als 5 oder größer als 10 ist.

10. Belüftungsanordnung (200) nach einem der vorhergehenden Ansprüche 6 bis 9, wobei die Ausströmöffnung (12) des ersten Luftausströmers (10) eine erste Längserstreckung aufweist und wobei die Ausströmöffnung (12) des zweiten Luftausströmers (50, 60) eine zweite Längserstreckung aufweist, und wobei die erste und die zweite Längserstreckung einen Winkel zwischen 20° und 160°, einen Winkel zwischen 45° und 135°, einen Winkel zwischen 60° und 120° oder einen Winkel zwischen 75° und 105° einschließen.

11. Belüftungsanordnung (200) nach einem der vorhergehenden Ansprüche 6 bis 10 wobei der erste Luftausströmer (10) und der zweite Luftausströmer (50, 60) voneinander beabstandet im Innenraum (3) anordenbar sind und wobei der erste Strömungskanal (20) des ersten Luftausströmers (10) an einer dem zweiten Luftausströmer (50, 60) zugewandten Seite des ersten Luftausströmers (10) angeordnet ist und wobei der erste Strömungskanal (20) des zweiten Luftausströmers (50, 60) an einer dem ersten Luftausströmer (10) zugewandten Seite des zweiten Luftausströmers (50, 60) angeordnet ist und wobei zur Erzeugung einer kombinierten Spot-Ausströmcharakteristik von erstem und zweitem Luftausströmer (10, 50, 60) im zweiten Verteilerkanal (222) ein höherer Luftmassenstrom als im ersten Verteilerkanal (220) einstellbar ist.

12. Belüftungsanordnung (200) nach einem der vorhergehenden Ansprüche 6 bis 11, wobei der erste Luftausströmer (10) und der zweite Luftausströmer (50, 60) voneinander beabstandet im Innenraum anordenbar sind und wobei der zweite Strömungskanal (22) des ersten Luftausströmers (10) an einer dem zweiten Luftausströmer (50, 60) abgewandten Seite des ersten Luftausströmers (10) angeordnet ist und wobei der zweite Strömungskanal (22) des zweiten Luftausströmers (50, 60) an einer dem ersten Luftausströmer (10) abgewandten Seite des zweiten Luftausströmers (50, 60) angeordnet ist und wobei zur Erzeugung einer diffusen oder räumlich divergierenden kombinierten Ausströmcharakteristik von erstem und zweitem Luftausströmer (10, 50, 60) im ersten Verteilerkanal (220) ein höherer Luftmassenstrom als im zweiten Verteilerkanal (220) einstellbar ist.

13. Kraftfahrzeug (1) mit einer Kraftfahrzeugkarosserie (2), einem Kraftfahrzeuginnenraum (3) und mit einer Belüftungsanordnung (200) nach einem der vorhergehenden Ansprüche 6 bis 12.

14. Computerprogramm, aufweisend von einem Computer ausführbare Instruktionen, die im Fall einer Abarbeitung durch den Computer ein Verfahren nach einem der vorherigen Ansprüche 1 bis 5 verwirklichen.

## Claims

1. A method for ventilating a motor vehicle interior with a ventilation arrangement (200), the ventilation arrangement (200) having a first air vent (10) which is arranged in the interior of the motor vehicle and has a first flow duct (20) and a second flow duct (22), the the first and the second flow channel (20, 22) of the first air vent (10) are fluidically separated from one another and open out at different angles into an outflow opening (12) of the first air vent (10), the ventilation arrangement (200) having a second air vent (50, 60) which is arranged at a distance from the first air vent (10), **characterized in that** the second air vent (50) has a first flow channel (20) and a second flow channel (22), the first and the second flow channel (20, 22) of the second air vent (50, 60) are fluidically separated from one another and at different angles i n an outflow opening (12) of the second air vent (50, 60) and wherein the first flow channels (20) of the first and second air vent (10, 50, 60) are fluidically coupled to one another by means of a first distributor channel (220) of an air distributor (210). and wherein the second flow channels (22) of the first and second air vents (10, 50, 60) are fluidically coupled to one another by means of a second distributor channel (222) of the air distributor (210), the method comprising the following steps:
- Applying a first air flow (30) to the first flow channel (20) and/or applying a second air flow (32) to the second flow channel (22) to form a first outflow air flow (40) at the outflow opening (12), des first air vent (10) and the second air vent (50,60), wherein the first vent air flow (40) has a first flow direction (41),
- Changing the air mass flow of the first air flow (30) relative to the air mass flow of the second air flow (32) and forming a second outflow air flow (42) at the outflow opening (12), the first air outflow (10) and the second air outflow (50,60 ), wherein the second outflow air flow (42) has a second flow direction (43) which differs from the first flow direction (41),
- the air mass flow in the first distributor duct for simultaneously changing the flow direction of the vent air streams (40, 42, 44, 52, 54, 56, 62, 64, 66) of the first air vent (10) and the second air vent (50, 60). (220) is changed relative to the air mass flow in the second distribution channel (222).

2. The method according to claim 1, wherein the air mass flow in the first flow channel (20) is changed regularly and/or continuously relative to the air mass flow in the second flow channel (22).

3. The method according to any one of the preceding claims, wherein the ventilation arrangement (200) has a fan (202) and a valve or flap arrangement (230) and wherein an air flow is generated by means of the fan (202) by means of the valve or flap arrangement (230) is variably and adjustably divided into first and second air streams (30, 32), which are fed to the respective first and second distribution channel (220, 222).

4. The method according to any one of the preceding claims, wherein the first air vent (10) and the second air vent (50, 60) are arranged at a distance from one another and the first flow channel (20) of the first air vent (10) is connected to one of the second air vents (50 , 60) facing the first air vent (10) and wherein the first flow channel (20) of the second air vent (50, 60) is arranged on a side of the second air vent (50, 60) facing the first air vent (10) and wherein a higher air mass flow is set in the second distributor duct (222) than in the first distributor duct (220) in order to generate a combined spot outflow characteristic of the first and second air vents (10, 50, 60).

5. The method according to any one of the preceding claims 1 to 3, wherein the first air vent (10) and the second air vent (50, 60) are arranged at a distance from one another and the second flow channel (22) of the first air vent (10) is on one of the second The side of the first air vent (10) facing away from the air vent (50, 60) is arranged, and the second flow channel (22) of the second air vent (50, 60) is arranged on a side of the second air vent (50, 60) facing away from the first air vent (10). and wherein a higher air mass flow is set in the first distribution duct (220) than in the second distribution duct (222) in order to generate a diffuse or spatially divergent combined outflow characteristic of the first and second air vents (10, 50, 60).

6. Ventilation arrangement (200) for ventilating a motor vehicle interior with:
- a first air vent (10) which can be arranged in the interior of the motor vehicle and which has a first flow channel (20) and a second flow channel (22), the first and the second flow channel (20, 22) being fluidically separated from one another and being divided into one at different angles outflow opening (12) of the first air vent (10),
- a second air vent (50, 60) that can be arranged in the interior of the motor vehicle
- an air distributor (210) which has a first distributor channel (220) and a second distributor channel (222), the first distributor channel (220) being fluidically separated from the second distributor channel (222), **characterized in that** the second air vent (50, 60) has a first flow duct (20) and a second flow duct (22), the first and second flow ducts (20, 22) being fluidically separate from one another and entering an outflow opening (12) of the second air vent (50, 60 ) open out, the first flow channels (20) of the first and second air vents (10, 50, 60) being fluidically coupled to one another by means of the first distribution channel (220), the second flow channels (22) of the first and second air vents (10, 50 , 60) are fluidically coupled to one another by means of the second distribution channel (222) and wherein for the simultaneous change of a direction of the Ausströ mer air flows (40, 42, 44, 52, 54, 56, 62, 64, 66) of the first air vent (10) and the second air vent (50, 60), the air mass flow in the first distribution channel (220) relative to the air mass flow in the second Distribution channel (222) is variable.

7. Ventilation arrangement (200) according to claim 6, which also has a fan (202) for generating an air flow and which has a valve or flap arrangement (230) by means of which the air flow can be variably and adjustably divided into first and second air flows (30, 32) can be divided for the first distribution channel (220) and for the second distribution channel (222).

8. Ventilation arrangement (200) according to claim 6 or 7, which further comprises a controller (70) by means of which the air mass flow in the first distribution channel (220) relative to the air mass flow in the second distribution channel (222) can be varied regularly and/or continuously.

9. Ventilation arrangement (200) according to one of the preceding claims 6 to 8, wherein the outflow opening (12) of the first air vent (10) and of the second air vent (50, 60) has a cross-sectional geometry with a height H and a width B, and wherein a width-to-height ratio B/H or a height-to-width ratio H/B is greater than 1, greater than 2, greater than 3, greater than 5, or greater than 10.

10. Ventilation arrangement (200) according to one of the preceding claims 6 to 9, wherein the outflow opening (12) of the first air vent (10) has a first longitudinal extent and the outflow opening (12) of the second air vent (50, 60) has a second longitudinal extent, and wherein the first and the second longitudinal extension enclose an angle between 20° and 160°, an angle between 45° and 135°, an angle between 60° and 120° or an angle between 75° and 105°.

11. Ventilation arrangement (200) according to one of the preceding claims 6 to 10, wherein the first air vent (10) and the second air vent (50, 60) can be arranged at a distance from one another in the interior (3) and the first flow channel (20) of the first air vent (10) is arranged on a side of the first air vent (10) facing the second air vent (50, 60), and wherein the first flow channel (20) of the second air vent (50, 60) is on a side of the second air vent (50, 60) and wherein a higher air mass flow can be set in the second distributor duct (222) than in the first distributor duct (220) in order to produce a combined spot outflow characteristic of the first and second air vent (10, 50, 60).

12. Ventilation arrangement (200) according to one of the preceding claims 6 to 11, wherein the first air vent (10) and the second air vent (50, 60) can be arranged at a distance from one another in the interior and the second flow channel (22) of the first air vent (10 ) is arranged on a side of the first air vent (10) remote from the second air vent (50, 60) and wherein the second flow channel (22) of the second air vent (50, 60) is located on a side of the second air vent remote from the first air vent (10). (50, 60) and wherein a higher air mass flow can be set in the first distribution duct (220) than in the second distribution duct (220) in order to generate a diffuse or spatially diverging combined outflow characteristic of the first and second air vents (10, 50, 60).

13. Motor vehicle (1) with a motor vehicle body (2), a motor vehicle interior (3) and with a ventilation arrangement (200) according to one of the preceding claims 6 to 12.

14. Computer program, having instructions executable by a computer, which implement a method according to one of the preceding claims 1 to 5 when processed by the computer.

## Revendications

1. Procédé de ventilation d'un habitacle de véhicule automobile avec un agencement de ventilation (200), l'agencement de ventilation (200) ayant une première bouche d'aération (10) qui est disposée dans l'habitacle du véhicule automobile et a un premier conduit d'écoulement (20 ) et un deuxième canal d'écoulement (22), le premier et le deuxième canal d'écoulement (20, 22) du premier évent (10) sont séparés l'un de l'autre du point de vue fluidique et débouchent à des angles différents dans une ouverture d'évacuation (12) du premier évent (10), le dispositif de ventilation (200) ayant un deuxième évent (50, 60) qui est disposé à distance du premier évent (10), **caractérisé en ce que** le deuxième évent (50) a un premier canal d'écoulement (20) et un deuxième canal d'écoulement (22), le premier et le deuxième canal d'écoulement (20, 22) du deuxième évent (50, 60) sont fluidiquement séparés l'un de l'autre et à des angles différents dans n une ouverture de sortie (12) du second évent (50, 60) et dans lequel les premiers canaux d'écoulement (20) des premier et second évents ( 10, 50, 60) sont couplés fluidiquement l'un à l'autre au moyen d'un premier canal de distribution (220) d'un distributeur d'air (210). et dans lequel les seconds canaux d'écoulement (22) des premier et second évents (10, 50, 60) sont couplés fluidiquement l'un à l'autre au moyen d'un second canal de distribution (222) du distributeur d'air (210), le procédé comprenant les étapes suivantes :
- appliquer un premier flux d'air (30) au premier canal d'écoulement (20) et/ou appliquer un deuxième flux d'air (32) au deuxième canal d'écoulement (22) pour former un premier flux d'air de sortie (40) au niveau de l'ouverture de sortie (12), le premier évent (10) et le deuxième évent (50, 60), dans lequel le premier écoulement d'air d'évent (40) a une première direction d'écoulement (41),
- modification du débit massique d'air du premier débit d'air (30) par rapport au débit massique d'air du deuxième débit d'air (32) et formation d'un deuxième débit d'air de sortie (42) au niveau de l'ouverture de sortie (12), le premier débit d'air de sortie (10) et la seconde sortie d'air (50, 60), dans lequel le second flux d'air de sortie (42) a une seconde direction d'écoulement (43) qui diffère de la première direction d'écoulement (41),
- le débit massique d'air dans le premier conduit de distribution pour modifier simultanément le sens d'écoulement des flux d'air d'aération (40, 42, 44, 52, 54, 56, 62, 64, 66) du premier aérateur (10) et du second évent (50, 60). (220) est modifié par rapport au débit massique d'air dans le deuxième canal de distribution (222).

2. Procédé selon la revendication 1, dans lequel le débit massique d'air dans le premier canal d'écoulement (20) est modifié régulièrement et/ou en continu par rapport au débit massique d'air dans le deuxième canal d'écoulement (22).

3. Procédé selon l'une quelconque des revendications précédentes, dans lequel l'agencement de ventilation (200) a un ventilateur (202) et un agencement de soupape ou de volet (230) et dans lequel un flux d'air est généré au moyen du ventilateur (202) au moyen de l'agencement de soupape ou de volet (230) est divisé de manière variable et réglable en premier et deuxième courants d'air (30, 32), qui sont amenés aux premier et deuxième canaux de distribution respectifs (220, 222).

4. Procédé selon l'une quelconque des revendications précédentes, dans lequel le premier évent (10) et le deuxième évent (50, 60) sont disposés à distance l'un de l'autre et le premier canal d'écoulement (20) du premier l'évent (10) est relié à l'un des deuxièmes évents (50, 60) faisant face au premier évent (10) et dans lequel le premier canal d'écoulement (20) du deuxième évent (50, 60) est agencé sur une côté du deuxième évent (50, 60) faisant face au premier évent (10) et dans lequel un débit massique d'air plus élevé est établi dans le deuxième conduit de distribution (222) que dans le premier conduit de distribution (220) afin de générer un caractéristique d'écoulement ponctuel combinée des premier et second évents d'air (10, 50, 60).

5. Procédé selon l'une quelconque des revendications précédentes 1 à 3, dans lequel le premier évent (10) et le deuxième évent (50, 60) sont disposés à distance l'un de l'autre et le deuxième canal d'écoulement (22) du premier évent (10) est sur l'un des deuxièmes Le côté du premier évent (10) opposé à l'évent (50, 60) est agencé, et le deuxième canal d'écoulement (22) du deuxième évent l'évent (50, 60) est agencé sur un côté du deuxième évent (50, 60) opposé au premier évent (10). et dans lequel un débit massique d'air plus élevé est établi dans le premier conduit de distribution (220) que dans le second conduit de distribution (222) afin de générer une caractéristique de sortie combinée diffuse ou spatialement divergente des premier et second évents d'air (10, 50, 60).

6. Agencement de ventilation (200) pour ventiler un habitacle de véhicule automobile avec :
- une première bouche d'aération (10) qui peut être disposée à l'intérieur du véhicule automobile et qui présente un premier canal d'écoulement (20) et un deuxième canal d'écoulement (22), le premier et le deuxième canal d'écoulement (20, 22) étant séparées fluidiquement l'une de l'autre et étant divisées en une ouverture d'évacuation (12) à des angles différents du premier évent (10),
- une seconde bouche d'aération (50, 60) pouvant être disposée à l'intérieur du véhicule automobile
- un distributeur d'air (210) qui a un premier canal de distribution (220) et un deuxième canal de distribution (222), le premier canal de distribution (220) étant fluidiquement séparé du deuxième canal de distribution (222), **caractérisé en ce que** le deuxième canal d'air l'évent (50, 60) comporte un premier conduit d'écoulement (20) et un second conduit d'écoulement (22), les premier et second conduits d'écoulement (20, 22) étant fluidiquement séparés l'un de l'autre et pénétrant dans une ouverture de sortie (12) du deuxième bouche d'aération (50, 60 ) débouchent, les premiers canaux d'écoulement (20) des première et deuxième bouches d'aération (10, 50, 60) étant couplés fluidiquement l'un à l'autre au moyen du premier canal de distribution (220), le des seconds canaux d'écoulement (22) des premier et second évents (10, 50, 60) sont couplés fluidiquement l'un à l'autre au moyen du second canal de distribution (222) et dans lequel pour le changement simultané d'une direction de l'Ausströ mer flux d'air (40, 42, 44, 52, 54, 56, 62, 64, 66) du premier aérateur (10) et du deuxième aérateur (50, 60), le débit massique d'air dans le premier canal de distribution (220) par rapport au débit massique d'air dans le deuxième canal de distribution (222) est variable.

7. Agencement de ventilation (200) selon la revendication 6, qui a également un ventilateur (202) pour générer un flux d'air et qui a un agencement de soupape ou de volet (230) au moyen duquel le flux d'air peut être divisé de manière variable et réglable en des premier et deuxième flux d'air (30, 32) peuvent être divisés pour le premier canal de distribution (220) et pour le deuxième canal de distribution (222).

8. Agencement de ventilation (200) selon la revendication 6 ou 7, qui comprend en outre un régulateur (70) au moyen duquel le débit massique d'air dans le premier canal de distribution (220) par rapport au débit massique d'air dans le deuxième canal de distribution ( 222) peut varier régulièrement et/ou en continu.

9. Agencement de ventilation (200) selon l'une des revendications précédentes 6 à 8, dans lequel l'ouverture de sortie (12) du premier évent (10) et du second évent (50, 60) a une géométrie en coupe transversale avec une hauteur H et une largeur B, et dans lequel un rapport largeur sur hauteur B/H ou un rapport hauteur sur largeur H/B est supérieur à 1, supérieur à 2, supérieur à 3, supérieur à 5, ou supérieur à 10.

10. Agencement de ventilation (200) selon l'une des revendications précédentes 6 à 9, dans lequel l'ouverture de sortie (12) du premier évent (10) a une première étendue longitudinale et l'ouverture de sortie (12) du deuxième évent (50, 60) a une deuxième extension longitudinale, et dans laquelle la première et la deuxième extension longitudinale enferment un angle entre 20° et 160°, un angle entre 45° et 135°, un angle entre 60° et 120° ou un angle entre 75° et 105°.

11. Agencement de ventilation (200) selon l'une des revendications précédentes 6 à 10, dans lequel le premier évent (10) et le deuxième évent (50, 60) peuvent être disposés à distance l'un de l'autre à l'intérieur (3 ) et le premier canal d'écoulement (20) du premier évent (10) est agencé sur un côté du premier évent (10) faisant face au deuxième évent (50, 60), et dans lequel le premier canal d'écoulement (20) du deuxième évent (50, 60) se trouve sur un côté du deuxième évent (50, 60) et dans lequel un débit massique d'air plus élevé peut être réglé dans le deuxième conduit de distribution (222) que dans le premier conduit de distribution (220 ) afin de produire une caractéristique d'écoulement ponctuel combinée des premier et deuxième évents d'aération (10, 50, 60)

12. Agencement de ventilation (200) selon l'une des revendications précédentes 6 à 11, dans lequel le premier évent (10) et le deuxième évent (50, 60) peuvent être disposés à distance l'un de l'autre à l'intérieur et le le second canal d'écoulement (22) du premier évent (10) est agencé sur un côté du premier évent (10) éloigné du second évent (50, 60) et dans lequel le second canal d'écoulement (22) du second l'évent (50, 60) est situé sur un côté du second évent éloigné du premier évent (10) (50, 60) et dans lequel un débit massique d'air plus élevé peut être réglé dans le premier conduit de distribution (220) que dans le deuxième conduit de distribution (220) afin de générer une caractéristique de sortie combinée diffuse ou spatialement divergente des première et deuxième bouches d'aération (10, 50, 60).

13. Véhicule automobile (1) avec une caisse de véhicule automobile (2), un habitacle de véhicule automobile (3) et avec un agencement de ventilation (200) selon l'une des revendications précédentes 6 à 12.

14. Programme d'ordinateur, comportant des instructions exécutables par un ordinateur, qui mettent en oeuvre un procédé selon l'une des revendications précédentes 1 à 5 lorsqu'ils sont traités par l'ordinateur.
